# EUROPÄISCHE PATENTSCHRIFT

(11) **EP 3 807 605 B1**
(45) Veröffentlichungstag und Bekanntmachung des Hinweises auf die Patenterteilung: **28.06.2023**
(21) Anmeldenummer: 19707761.3
(22) Anmeldetag: 25.02.2019
(51) Int. Cl.: G01G 15/00, B65G 54/02, B65G 17/20, G01G 19/08

(54) **VERFAHREN UND VORRICHTUNG ZUR LASTIDENTIFIKATION EINES TRANSPORTELEMENTS EINES LANGSTATOR-LINEARMOTORSYSTEMS**
METHOD AND APPARATUS FOR IDENTIFYING THE LOAD OF A TRANSPORT ELEMENT OF A LONG-STATOR LINEAR MOTOR SYSTEM
PROCÉDÉ ET DISPOSITIF D'IDENTIFICATION D'UNE CHARGE D'UN ÉLÉMENT DE TRANSPORT D'UN SYSTÈME À MOTEUR LINÉAIRE À STATOR LONG

(30) Priorität: 15.06.2018 DE 102018209725
(43) Veröffentlichungstag der Anmeldung: 21.04.2021
(73) Patentinhaber: Krones AG, 93073 Neutraubling (DE)
(72) Erfinder: KIENDL, Thomas, 93073 Neutraubling (DE)
(74) Vertreter: Grünecker Patent- und Rechtsanwälte PartG mbB
(86) Internationale Anmeldenummer: PCT/EP2019/054515
(87) Internationale Veröffentlichungsnummer: WO 2019/238277

(56) Entgegenhaltungen:
- WO-A1-2018/208658
- DE-A1- 3 544 201

## Beschreibung

### Gebiet der Erfindung

Die vorliegende Erfindung betrifft ein Verfahren und eine Vorrichtung zur Lastidentifikation sowie zur Erkennung des Beladungszustands eines Transportelements eines Transportsystems mit einem Langstator-Linearmotor.

### Stand der Technik

Transportsysteme mit Linearmotorantrieb sind im Stand der Technik wohl bekannt. Den Transportsystemen mit Linearmotorantrieb ist dabei gemein, dass speziell dazu ausgebildete Transportelemente, sogenannte Läufer, Mover oder Pucks, mit dem oder den Langstatoren eines oder mehrerer Linearmotoren entlang einer Transportbahn, insbesondere entlang einer oder mehrerer Führungsschienen, bewegt werden. Dabei werden die Transportelemente häufig insbesondere dazu eingesetzt, Objekte, insbesondere Behälter, Preformen bzw. Gebinde, entlang der Transportbahn zu transportieren. Insbesondere in der Getränke verarbeitenden Industrie ist es häufig erforderlich, die nach dem Abfüllvorgang von Getränken oder anderen Flüssigkeiten befüllten Behälter bezüglich des Füllstands des einzelnen Behälters zu kontrollieren, um sicherzustellen, dass die Abweichungen vom Soll-Wert der Füllung des Behälters nicht zu groß sind. Ebenso ist es häufig erforderlich, die leeren oder befüllten Behälter auf Unversehrtheit zu prüfen. Schließlich ist es für die Zusammenfassung mehrerer Behälter zu einem Sekundärgebinde im Allgemeinen erforderlich, festzustellen, ob die Transportelemente mit einem Behälter oder mehreren Behältern beladen oder unbeladen sind, bzw. ob die Anzahl der geladenen Behälter korrekt ist.

Im Stand der Technik bekannt sind insbesondere Verfahren zur Detektion von Behältern, die von Transportelementen befördert werden, über optische Sensoren, beispielsweise Lichtschranken. Es ist weiterhin bekannt, den Füllstand optisch, mittels Hochfrequenz, mittels Röntgen- oder Gammastrahlung oder ähnlichen Verfahren zu messen. Die Messgenauigkeit ist jedoch bei schäumenden oder aufgrund des Transports schwappenden Flüssigkeiten, sowie dehnbaren Behältern oft unzureichend, sodass eine zuverlässige Bestimmung des Füllstandes erst durch Wiegen des Behälters garantiert werden kann. Eine solche Bestimmung des Füllstands durch Wiegen einzelner Behälter in einem speziell dafür ausgebildeten Wägebereich des Transportsystems ist beispielsweise in der WO 2015/144379 A1 beschrieben.

Weiterer Stand der Technik ist die DE 35 44 201 A1 und die EP 18 798 953.8 (Stand der Technik nach Art. 54(3) EPÜ).

In der DE 35 44 201 A1 wird der Beladungszustand eines Transportelementes direkt durch eine Geschwindigkeitsänderung bestimmt. Die Geschwindigkeit des Transportelements der DE 35 44 201 A1 wird zunächst durch zwei Lichtschranken festgestellt. Dann wird ein fester in einem ROM vorgegebener Impuls an das Transportelement abgegeben und die geänderte Geschwindigkeit abermals durch zwei weitere Lichtschranken bestimmt.

Um den Beladungszustand eines Transportelements, der beispielsweise aufgrund des Füllstands eines transportierten Behälters variieren kann, zu bestimmen, sind im Stand der Technik externe und zusätzliche Messsensoren sowie entsprechend angepasste Bewegungsabläufe des Transportelements nötig, um die Messung bzw. Detektion durchführen zu können. So sind im Stand der Technik insbesondere gesonderte Messstrecken vorgesehen, entlang derer entsprechende Messvorrichtungen bzw. Wägevorrichtungen vorgesehen sind.

Dies erhöht jedoch einerseits die Anzahl an möglicherweise fehlerhaften Komponenten im System, begrenzt andererseits aufgrund einer erforderlichen Durchlaufzeit durch die Messsensorik im Allgemeinen auch den Gesamtdurchsatz der Anlage. Durch die zusätzlichen Komponenten entsteht zudem ein Kostenfaktor, wobei weitere Kosten durch die Montage sowie Wartung der Komponenten anfallen. Des Weiteren sind Messsensoren wie oben erwähnt im Allgemeinen an konkreten Messstellen montiert. Ein möglicherweise sortenabhängiger Messpunkt muss dabei durch mechanische Verstellung der Messstellen oder durch eine Vielzahl an Sensoren abgedeckt werden.

Der vorliegenden Erfindung liegt somit die Aufgabe zugrunde, ein Verfahren und eine Vorrichtung zur Identifikation einer Last bzw. Erkennung des Beladungszustands eines Transportelements oder mehrerer Transportelemente eines Langstator-Linearmotorsystems zur Verfügung zu stellen, welches den Beladungszustand, insbesondere die Masse des oder der mitgeführten Objekte bzw. Behälter oder Gebinde, mit hoher Genauigkeit bestimmen kann. Darüber hinaus liegt der Erfindung die Aufgabe zugrunde, die Identifikation der Last des Transportelements ohne wesentlichen Eingriff in den Produktionsablauf durchzuführen, um die Gesamtproduktivität der Anlage nicht zu beeinträchtigen. Schließlich ist auch eine Erkennung des Beladungszustands eines Transportelements unabhängig von bestimmten Messstellen wünschenswert.

### Beschreibung der Erfindung

Die oben genannten Aufgaben werden gelöst durch ein Verfahren zur Identifikation einer Last und/oder eines Verschleißes eines, insbesondere mit wenigstens einem Behälter beladenen, Transportelements eines Transportsystems mit einer Vielzahl von Transportelementen, einem, insbesondere synchronen, Langstator-Linearmotor und einer Regeleinheit zum individuell gesteuerten Bewegen der Transportelemente entlang einer Transportbahn des Transportsystems mittels des Langstator-Linearmotors, welches die folgenden Schritte umfasst: Anregung eines aus dem Langstator-Linearmotor und dem Transportelement bestehenden dynamischen Systems durch Ansteuern des Langstator-Linearmotors mittels der Regeleinheit nach wenigstens einem Anregungsmuster, wobei jedes Anregungsmuster einem Bewegungsprofil des Transportelements entlang der Transportbahn entspricht; Erfassen des Bewegungsprofils des Transportelements entlang der Transportbahn aufgrund des wenigstens einen Anregungsmusters mittels einer Positionserfassungsvorrichtung und/oder Geschwindigkeitserfassungsvorrichtung des dynamischen Systems; Erfassen eines zeitlichen Verlaufs eines Laststroms und/oder einer Lastspannung, mit dem und/oder mit der die Regeleinheit den Langstator-Linearmotor gemäß dem wenigstens einen Anregungsmuster betreibt, mittels einer integrierten Messvorrichtung des Langstator-Linearmotors; wobei ein Beladungszustand des Transportelements, insbesondere eine Last des Transportelements, und/oder ein Verschleiß einer Lagerung des Transportelements an der Transportbahn in Abhängigkeit von dem erfassten Bewegungsprofil und dem erfassten zeitlichen Verlauf des Laststroms und/oder der Lastspannung mittels der Regeleinheit bestimmt wird.

Die Transportelemente können jeweils mit wenigstens einem Behälter, einer Preform oder einem Gebinde beladen sein. Der Einfachheit halber wird im Folgenden von der Beladung mit Behältern gesprochen. Es versteht sich jedoch, dass hiermit auch eine Beladung mit Preformen oder Gebinden umfasst ist.

Unter dem Beladungszustand eines Transportelements ist hier und im Folgenden zu verstehen, ob das Transportelement leer läuft oder mit einem Objekt, insbesondere einem Behälter, beladen ist. Denkbar ist auch, dass ein Objekt von zwei oder mehr Transportelementen gemeinsam transportiert wird. In diesem Fall ist unter dem Beladungszustand eines Transportelements auch zu verstehen, ob das Transportelement an einem solchen gemeinsamen Transport beteiligt ist. Des Weiteren ist unter dem Beladungszustand auch eine Anzahl der mitgeführten Objekte, beispielsweise Behälter, zu verstehen, wenn das Transportelement dazu ausgebildet ist, einen oder mehrere Behälter zu transportieren.

Unter der Last des Transportelements ist hier und im Folgenden die Masse bzw. das Gewicht einer von dem Transportelement transportierten Ladung, insbesondere wenigstens eines transportierten Behälters, zu verstehen. Es versteht sich, dass das Bestimmen einer Last von Null dem Bestimmen eines unbeladenen Transportelements als Beladungszustand entspricht. Die Identifikation einer Last des Transportelements gemäß der vorliegenden Erfindung umfasst somit einerseits die Feststellung, ob ein bestimmtes Transportelement beladen oder unbeladen ist, und andererseits die quantitative Bestimmung der Last, indem die mitgeführte Masse bestimmt wird. Aus der mitgeführten Masse kann dann ermitteln werden, ob einer oder mehrere Behälter von dem Transportelement transportiert werden. Auch kann durch die Regeleinheit geprüft werden, ob die Anzahl der mitgeführten Behälter einer Sollanzahl entspricht. Des Weiteren kann, insbesondere für Glasbehälter, automatisch bestimmt werden, ob die Last aufgrund einer Beschädigung des Behälters wie Glasbruch, von einer Solllast abweicht und somit auf die Intaktheit der mitgeführten Behälter rückgeschlossen werden.

Dabei kann gemäß einer Variante zunächst die Gesamtmasse des Systems ,Transportelement plus Last' bestimmt werden, woraus von der Regeleinheit unter Kenntnis der Masse des unbeladenen Transportelements die mitgeführte Masse berechnet werden kann. Der einfacheren und klareren Darstellung wegen wird im Folgenden stets von Bestimmen der Last gesprochen, auch wenn das Bestimmen des Beladungszustands mit umfasst ist. Auf das separate Bestimmen des Beladungszustands ohne Bestimmen der Last wird lediglich an den entsprechenden Stellen unmittelbar eingegangen.

Langstator-Linearmotorsysteme sind im Stand der Technik hinreichend bekannt, sodass hier auf eine detaillierte Beschreibung verzichtet wird. Ein solches Linearmotorsystem weist eine Vielzahl von Transportelementen auf, die als Läufer, Puck, Schlitten, Shuttle oder dergleichen ausgebildet sein können, die durch Wechselwirkung mit wenigstens einem als Langstator ausgebildeten Linearmotorstrang des Linearmotors entlang der Transportbahn bewegt werden können. Die Transportelemente können dabei über die Regeleinheit individuell gesteuert werden, wobei jedes Transportelement je nach Bedarf an der Transportbahn beschleunigt, abgebremst, mit konstanter Geschwindigkeit bewegt oder auch zeitweise ganz angehalten werden kann. Aufgrund der individuellen Steuerbarkeit der Transportelemente ergibt sich ein variables Bewegungsprofil jedes einzelnen Transportelements. Unter einem Bewegungsprofil ist hier und im Folgenden ein Weg-Zeit-Profil und/oder ein Geschwindigkeit-Zeit-Profil der Bewegung des entsprechenden Transportelements zu verstehen.

Der wenigstens eine Linearmotorstrang des Langstator-Linearmotors kann insbesondere als synchroner Linearmotor ausgebildet sein, da beim synchronen Linearmotor im Allgemeinen kein Schlupf auftritt, sodass das Bewegen eines Transportelements mit einem vorgegebenen Bewegungsprofil leichter von der Regeleinheit durchgeführt werden kann. In einer alternativen Ausführung kann der wenigstens eine Linearmotorstrang jedoch auch als asynchroner Linearmotor ausgebildet sein, wobei das Transportelement ein elektrisch leitendes Element für die Induktion durch den asynchronen Linearmotor aufweisen kann.

Gemäß der vorliegenden Erfindung findet der Vortrieb der Transportelemente entlang der Transportbahn durch magnetische Wechselwirkung zwischen mindestens einem Permanentmagneten und/oder nicht schaltenden Elektromagneten eines Reaktionselements des Transportelements mit dem wenigstens einen Langstator des Langstator-Linearmotors statt. Das Reaktionselement eines Transportelements bezeichnet dabei die Untereinheit des Transportelements, auf welche durch magnetische Wechselwirkung mit entsprechenden Wechselwirkungselementen des Langstator-Linearmotors eine Kraft zum Bewegen des Transportelements ausgeübt wird. Zum gezielten Bewegen der Transportelemente weist der Langstator-Linearmotor eine Vielzahl entlang des jeweiligen Linearmotorstranges angeordneter elektrischer Wicklungen in Form von einzeln oder blockweise ansteuerbaren Elektromagneten auf. Hierbei sind auch komplexere Ausführungen, zum Beispiel mittels einer Halbachanordnung der Elektromagnete zur Verstärkung des magnetischen Flusses auf der dem Reaktionselement des Transportelements zugewandten Seite, denkbar. Gemäß der vorliegenden Erfindung ist das Transportelement als passives Transportelement ausgebildet, welches über das Reaktionselement mit mindestens einem Permanentmagneten und/oder nicht schaltenden Elektromagneten durch Wechselwirkung mit den von den einzeln ansteuerbaren Elektromagneten des oder der Langstatoren erzeugten elektromagnetischen Wechselfeldern bewegt wird. Ein nicht schaltender Elektromagnet ist dabei derart mit einer Stromversorgung und/oder der Regeleinheit der Transporteinrichtung verbunden, dass er stets in derselben Richtung von einem, vorzugsweise konstanten, elektrischen Strom durchflossen wird.

Um ein Transportelement mit einem gewünschten Bewegungsprofil entlang der Transportbahn zu bewegen, steuert die Regeleinheit wie im Stand der Technik allgemein bekannt die Spulen des Langstators einzeln oder blockweise über einen entsprechenden Spannung- bzw. Stromimpuls an. Um eine für das Bewegungsprofil erforderliche Kraft, zum Beschleunigen des Transportelements, zum Überwinden einer Reibungskraft bei konstanter Fahrt, oder zum Abbremsen des Transportelements, durch die magnetische Wechselwirkung zu erzeugen, werden die Spulen im Bereich des Transportelements phasengerecht mit einer entsprechenden Lastspannung belegt bzw. einem entsprechenden Laststrom bestromt. Beispielsweise kann die Bewegung des Transportelements durch einen dreiphasigen Spannungsimpuls an der oder den Spulen gesteuert werden, wobei der Spannungsimpuls mit dem Transportelement weiterbewegt wird. Die Phase hängt von der aktuellen und der gewünschten Position des Transportelements ab.

Der von der Regeleinheit generierte Impuls der Steuerspannung bzw. des Steuerstroms wird mittels eines Verstärkers in eine entsprechende Lastspannung bzw. einen entsprechenden Laststrom an der oder den Spulen umgesetzt. Hierzu kann die Regeleinheit beispielsweise einen Servoverstärker bzw. Servoregler aufweisen, der die niedrige Steuerspannung auf die benötigte höhere Lastspannung umsetzt. Aufgrund der Induktivitäten der verwendeten Spulen hinkt der tatsächliche Laststrom in den Spulen, und damit die auf das Transportelement wirkende Kraft, jedoch im Allgemeinen der Steuerspannung bzw. dem Steuerstrom hinterher. Darüber hinaus treten bei der Bewegung des Transportelements im Allgemeinen unbekannte Einflüsse auf, welche zu einer Abweichung der tatsächlichen Bewegung des Transportelements von dem von der Regeleinheit vorgegebenen Bewegungsprofil führen. Solche Einflüsse sind beispielsweise wie unten genauer beschrieben aufgrund einer auftretenden Reibung, insbesondere in Abhängigkeit von einem Verschleiß einer Lagerung des Transportelements an der Transportbahn, sowie der zunächst unbekannten Masse des beladenen Transportelements vorhanden.

Um den resultierenden Positionierfehler, d.h. die Abweichung der tatsächlichen Position des Transportelements von der gewünschten Position aufgrund eines vorgegebenen Bewegungsprofils, möglichst gering zu halten, weist das erfindungsgemäße Transportsystem, wie im Stand der Technik allgemein bekannt, eine Regelung der Steuerspannung/des Steuerstroms bzw. der Lastspannung/des Laststroms mittels Feedback durch eine Positionserfassungsvorrichtung und/oder Geschwindigkeitserfassungsvorrichtung des Transportsystems auf. Dabei misst die Positionserfassungsvorrichtung die tatsächliche Position des Transportelements und liefert sie als Feedback an die Regeleinheit zurück. Aufgrund der tatsächlichen Position und optional einer von der Geschwindigkeitserfassungsvorrichtung erfassten tatsächlichen Geschwindigkeit des Transportelements kann die Regeleinheit die Steuerspannung bzw. die Lastspannung entsprechend anpassen. Darüber hinaus können auch die tatsächliche an der oder den Spulen anliegende Lastspannung bzw. der tatsächlich fließende Laststrom mittels geeigneter Messvorrichtungen des Langstator-Linearmotors bestimmt und als Feedback an die Regeleinheit übermittelt werden. Solche Messvorrichtungen sind im Stand der Technik wohl bekannt und können als Spannungsmesser bzw. Stromstärkemesser direkt in den Langstator integriert werden. Aufgrund der übermittelten tatsächlichen Lastspannung und/oder des übermittelten tatsächlichen Laststroms kann die Regeleinheit eine Abweichung von der gewünschten Lastspannung bzw. dem gewünschten Laststrom bestimmen und in die Regelung des Langstator-Linearmotors einfließen lassen. Regeleinheiten zur Regelung der Lastspannung bzw. des Laststroms von Langstator-Linearmotoren, beispielsweise unter Verwendung eines PID-Reglers, sind im Stand der Technik allgemein bekannt und werden daher hier nicht im Detail beschrieben.

Beispielsweise kann ein Servoverstärker der Regeleinheit die zurückgeführten Informationen bezüglich der tatsächlichen Position, der tatsächlichen Geschwindigkeit und/oder der tatsächlichen Stärke des Laststroms verarbeiten, um ein geeignetes Lastspannungssignal an den Langstator-Linearmotor zu übertragen. Das Spannungssignal kann dabei dem Linearmotor in Form von Impulsen mit fester Schalthäufigkeit übergeben werden, wobei auch die Impulsdauer als zu regelnder Parameter behandelt werden kann. Die Genauigkeit der Regelung durch die Regeleinheit kann durch die Schalthäufigkeit und die Impulsspannung beeinflusst werden.

Die vorliegende Erfindung nutzt diese bereits im Stand der Technik bekannte Regelung eines Langstator-Linearmotors zur Erzeugung eines gewünschten Bewegungsprofils eines Transportelements, um die Last des Transportelements ohne zusätzlich erforderliche Sensoren zu bestimmen. Dabei erfasst die Regeleinheit das tatsächliche Bewegungsprofil des Transportelements entlang der Transportbahn aufgrund eines Anregungsmusters zum Ansteuern des Langstator-Linearmotors mittels der Positionserfassungsvorrichtung und/oder der Geschwindigkeitserfassungsvorrichtung des aus dem Langstator-Linearmotor und dem Transportelement bestehenden dynamischen Systems.

Gemäß der Systemtheorie bilden der Langstator-Linearmotor und das Transportelement ein dynamisches System, von dem ein Eingangssignal, beispielsweise eine vorgegebene Steuerspannung bzw. ein vorgegebener Steuerstrom oder ein vorgegebenes Bewegungsprofil, in ein Ausgangssignal, beispielsweise ein gemessenes tatsächliches Bewegungsprofil oder eine gemessene benötigte Lastspannung bzw. ein gemessener benötigter Laststrom, umgewandelt wird. Dabei kann es sich sowohl bei dem Eingangssignal als auch bei dem Ausgangssignal um skalare Werte, Vektoren oder Matrizen, sowie um Zeitreihen dieser Signale handeln. Die Eingangssignale und Ausgangssignale können bekanntlich als kontinuierliches Signal oder als Abfolge diskreter Werte vorliegen. Mathematisch wird die Beziehung zwischen dem Eingangssignal und dem Ausgangssignal des dynamischen Systems im Frequenzraum mittels einer Übertragungsfunktion oder Systemfunktion beschrieben. Dabei gibt es wie unten genauer beschrieben mehrere Ansätze, das dynamische System bzw. die Übertragungsfunktion zu modellieren. Das Systemmodell bzw. die Übertragungsfunktion wird dabei durch mehrere, zunächst unbekannte Parameter, darunter insbesondere die Last des Transportelements, bzw. die Gesamtmasse des beladenen bzw. unbeladenen Transportelements, beeinflusst.

Durch, insbesondere wiederholtes, Bestimmen der Eingangssignale sowie der Ausgangssignale für ein oder mehrere Anregungsmuster des dynamischen Systems kann ein, im Allgemeinen überbestimmtes, Gleichungssystem aufgestellt werden, aus dem mittels der Regeleinheit die Last des Transportelements bestimmt werden kann. Dabei ist hier und im Folgenden unter einem Anregungsmuster eine zeitliche Entwicklung einer Steuerspannung und/oder eines Steuerstroms zu verstehen, mit der und/oder mit dem die Regeleinheit die entsprechende Spule bzw. die entsprechenden Spulen des Langstator-Linearmotors ansteuert. Somit entspricht jedes Anregungsmuster einem Bewegungsprofil des Transportelements entlang der Transportbahn. Dabei sind wie unten genauer beschrieben sowohl Anregungsmuster umfasst, deren zeitliche Entwicklung der Steuerspannung und/oder des Steuerstroms mittels des oben beschriebenen Feedbacks an ein vorgegebenes Bewegungsprofil durch die Regeleinheit angepasst wurde, sowie Anregungsmuster, die einer vorgegebenen Entwicklung der Steuerspannung und/oder des Steuerstroms entsprechen. Im letzteren Fall ergibt sich das Bewegungsprofil unter Berücksichtigung der Einflüsse auf das dynamische System, beispielsweise der Induktivitäten der Spulen und der auftretenden Reibungskräfte.

Gemäß einer Weiterbildung können ein oder mehrere Anregungsmuster jeweils einem vorgegebenen Bewegungsprofil des Transportelements entsprechen, wobei der zeitliche Verlauf des Laststroms und/oder der Lastspannung mittels der Regeleinheit derart angepasst wird, dass das erfasste Bewegungsprofil dem vorgegebenen Bewegungsprofil im Wesentlichen entspricht. Dabei liegt eine Entsprechung im Wesentlichen vor, wenn das erfasste Bewegungsprofil von dem vorgegebenen Bewegungsprofil, abgesehen von einer zeitlichen Verschiebung bis zu 50 ms, bevorzugt bis zu 25 ms, um weniger als 20 % des vorgegebenen Bewegungsprofils, bevorzugt um weniger als 10 % des vorgegebenen Bewegungsprofils abweicht. Das entsprechende Anregungsmuster umfasst somit die oben erwähnte zeitliche Entwicklung einer Steuerspannung und/oder eines Steuerstroms, die dem vorgegebenen Bewegungsprofil insofern entspricht, als aufgrund dieses Anregungsmusters der erforderliche zeitliche Verlauf des tatsächlichen Laststroms und/oder der tatsächlichen Lastspannung zum Erreichen des vorgegebenen Bewegungsprofils erzielt wird. In diesem Fall umfasst das Eingangssignal des dynamischen Systems also das vorgegebene Bewegungsprofil, während das Ausgangssignal des dynamischen Systems den von der Regeleinheit angepassten, tatsächlichen zeitlichen Verlauf des Laststroms und/oder der Lastspannung umfasst.

Alternativ oder ergänzend können wie oben erwähnt ein oder mehrere Anregungsmuster jeweils einem vorgegebenen zeitlichen Verlauf des Laststroms und/oder der Lastspannung entsprechen. In diesem Fall wird also ein zeitlicher Verlauf der entsprechenden Steuersignale, d.h. der Steuerspannung und/oder des Steuerstroms, von der Regeleinheit als Anregungsmuster vorgegeben, aufgrund derer sich der vorgegebene zeitliche Verlauf des Laststroms und/oder der Lastspannung ergibt. Somit kann entweder der vorgegebene zeitliche Verlauf der Steuerspannung und/oder Steuerstroms oder der tatsächlich gemessene zeitliche Verlauf des Laststroms und/oder der Lastspannung aufgrund der vorgegebenen Steuersignale als Eingangssignal des dynamischen Systems verwendet werden, während das tatsächlich erfasste Bewegungsprofil, d.h. das Weg-Zeit-Profil und/oder Geschwindigkeit-Zeit-Profil, des Transportelements, dem das Transportelement aufgrund der vorgegebenen Steuersignale folgt, als Ausgangssignal des dynamischen Systems verwendet wird.

In beiden Fällen möglicher Anregungsmuster lässt sich die Last des Transportelements beispielsweise als einer der unbekannten Parameter der Übertragungsfunktion des dynamischen Systems in Abhängigkeit von dem erfassten Bewegungsprofil und dem erfassten zeitlichen Verlauf des Laststroms und/oder der Lastspannung mittels der Regeleinheit bestimmen. Dies liegt daran, dass die Last unmittelbar einen Einfluss auf eine Beschleunigung bzw. Abbremsung des Transportelements über die träge Masse des Transportelements, inklusive Ladung, hat und selbst bei konstanter Fahrt über den Einfluss der lastabhängigen Normalkraft auf die auftretende Reibung das Bewegungsprofil des Transportelements beeinflusst.

Gemäß der vorliegenden Erfindung wird somit das aus dem Langstator-Linearmotor und dem Transportelement bestehende dynamische System durch Ansteuern des Langstator-Linearmotors mittels der Regeleinheit gemäß wenigstens einem Anregungsmuster angeregt, wobei jedes Anregungsmuster einem Bewegungsprofil des Transportelements entlang der Transportbahn entspricht. Eine im Allgemeinen bereits vorhandene Positionserfassungsvorrichtung und/oder Geschwindigkeitserfassungsvorrichtung des dynamischen Systems wird dann benutzt, um das tatsächliche Bewegungsprofil des Transportelements entlang der Transportbahn aufgrund des wenigstens einen Anregungsmusters zu erfassen. Dabei können wie unten genauer beschrieben mittels geeigneter Sensoren des Langstator-Linearmotors und/oder des Transportelements die zeitaufgelöste Position und/oder Geschwindigkeit des Transportelements, also das tatsächliche Weg-Zeit-Profil und/oder das tatsächliche Geschwindigkeit-Zeit-Profil des Transportelements bestimmt werden. Darüber hinaus kann die Regeleinheit aus dem erfassten Weg-Zeit-Profil auch das entsprechende Geschwindigkeit-Zeit-Profil durch Ableitung oder Differenzenbildung berechnen. Umgekehrt kann die Regeleinheit aus dem erfassten Geschwindigkeit-Zeit-Profil das entsprechende Weg-Zeit-Profil durch Integration oder Summenbildung berechnen. Im Prinzip ist somit die Erfassung des Geschwindigkeit-Zeit-Profils der Erfassung des Weg-Zeit-Profils äquivalent, wobei die unabhängige Erfassung beider Profile die Genauigkeit der Berechnung erhöht.

Ebenso wird gemäß der vorliegenden Erfindung der tatsächliche zeitliche Verlauf eines Laststroms und/oder einer Lastspannung, mit dem und/oder mit der die Regeleinheit den Langstator-Linearmotor gemäß dem wenigstens einen Anregungsmuster betreibt, mittels einer integrierten Messvorrichtung des Langstator-Linearmotors erfasst. Aus dem erfassten Bewegungsprofil und den erfassten zeitlichen Verläufen der elektrischen Last des Langstator-Linearmotors lässt sich wie oben erwähnt ein Gleichungssystem aufstellen, aus der mittels der Regeleinheit wie unten beschrieben die Last des Transportelements bestimmt werden kann. Dabei ist die Lasterfassung gemäß der vorliegenden Erfindung umso genauer, je größer die Anzahl der Messungen bzw. je größer die Überbestimmtheit des Gleichungssystems ist. Erfindungsgemäß können somit mehrere, insbesondere verschiedene Anregungsmuster von der Regeleinheit verwendet werden, um entsprechend viele Messungen durchzuführen. Die Anregungsmuster können dabei von der Regeleinheit aus einem Speicher der Regeleinheit, beispielsweise in Form einer Sortenverwaltung, in Abhängigkeit von dem zu befördernden Objekt bzw. Behälter ausgelesen werden.

Zur Vereinfachung des Gleichungssystems kann die Regeleinheit bekannte Motorparameter des Langstator-Linearmotors, beispielsweise die Dimensionierung und Ausrichtung der Spulen sowie die Breite des Luftspalts, verwenden, um aus einem Vektor der tatsächlich gemessenen Lastströme der einzelnen Spulen die auf das Transportelement wirkende Kraft in bzw. entgegen der Vorschubrichtung zu berechnen.

Gemäß der vorliegenden Erfindung ist es somit möglich, ohne zusätzliche Sensoren, lediglich mithilfe des Transportsystems, eine Lastidentifikation durchzuführen, und insbesondere die Masse des beladenen oder unbeladenen Transportelements zu bestimmen. Durch Abzug der bekannten Masse des Transportelements kann die Regeleinheit aus der bestimmten Gesamtmasse somit die Masse des oder der transportierten Objekte, insbesondere Behälter, berechnen. Da bei den in der Getränke verarbeitenden Industrie üblichen Kunststoff- und Glasbehältern oder Metallbehältern, beispielsweise Flaschen oder Dosen, die Masse der einzelnen Behälter typischerweise konstant und relativ gut bekannt ist, zum Beispiel mit Abweichungen von 1 g oder weniger, kann aus der bestimmten Masse des befüllten Behälters somit die Füllmenge und damit der Füllstand gemäß der vorliegenden Erfindung mit einer hohen Genauigkeit bestimmt werden. Das Ergebnis des erfindungsgemäßen Verfahrens ist dabei unabhängig von Schäumen oder Bewegungen der Flüssigkeit und auch für Behälter möglich, bei denen optische Systeme versagen.

Des Weiteren kann unter Kenntnis der Masse eines Behälters sowie der Sollfüllmenge eine Anzahl der von einem Transportelement mitgeführten Behälter durch die Regeleinheit aus der bestimmten Last ermittelt werden. Die Regeleinheit kann die ermittelte Anzahl mit einem Soll-wert vergleichen, um festzustellen, ob ein Transportelement falsch oder unzureichend beladen ist.

Es versteht sich, dass das oben beschriebene Verfahren auch auf Gruppen aus zwei oder mehr Transportelementen angewendet werden kann, die gemeinsam ein Objekt, beispielsweise einen Karton oder ein Rüstteil transportierten. In diesem Fall kann die Last jedes Transportelements der Gruppe separat bestimmt werden. Hierbei, wie auch ganz allgemein für die gemeinsame Bewegung der Gruppe von Transportelementen, empfiehlt sich die Verwendung identischer Anregungsmuster für die Bewegung der Transportelemente der Gruppe. Aus den bestimmten Einzellasten der Transportelemente der Gruppe kann die Regeleinheit eine Gesamtlast bzw. eine Gesamtmasse des mitgeführten Objekts bestimmten. Aus dieser wiederum können der Füllzustand des Objekts, beispielsweise eines Kartons, und/oder der Typ des Objekts, beispielsweise die Größe der Kartons oder die Art des Behältergebindes, bestimmt werden. Die Regeleinheit kann hierzu über eine Sortenverwaltung verfügen, die Massen verschiedener Objekttypen in einer Speichereinheit speichert.

Gemäß der vorliegenden Erfindung kann aus der bestimmten Last auch auf einen Verschleiß einer Lagerung des Transportelements an der Transportbahn, beispielsweise einen Verschleißgrad von Führungs- und/oder Lagerelementen des Transportelements, geschlossen werden. Hierzu kann insbesondere die Last einen unbeladenen Transportelements in bestimmten zeitlichen Abständen wiederholt bestimmt werden. Aus der zeitlichen Veränderung der bestimmten Last kann die Regeleinheit den Verschleißgrad bestimmen. Hierzu kann unter Kenntnis der Masse des unbeladenen Transportelements insbesondere ein Wert für die Reibung der Führungs- und/oder Lagerelemente des Transportelements bei der Bewegung bestimmt werden. Eine Zunahme der Reibung aufgrund eines zunehmenden Verschleißes der Führungs- und/oder Lagerelemente äußert sich dann in einer Zunahme der festgestellten Last. Insbesondere kann die Regeleinheit aus dem Bestimmen einer von Null verschiedenen mitgeführten Masse, die bei Annahme eines unverschlissenen, unbeladenen Transportelements als Null bestimmt werden sollte, auf einen Verschleiß der Führungs- und/oder Lagerelemente schließen. Dieser Verschleiß kann insbesondere von der Regeleinheit quantifiziert werden, sodass auch ein Vergleich mit einem Schwellenwert durch die Regeleinheit möglich ist, bei dessen Überschreitung das Transportelement einer Wartung zugeführt werden kann.

Gemäß einer Weiterbildung kann das Verfahren weiterhin eine zumindest teilweise Modellierung des dynamischen Systems nach einem Grey-Box-Modell, insbesondere nach einem 2-Massen-Modell, umfassen, wobei das Bestimmen des Beladungszustands des Transportelements, insbesondere der Last des Transportelements, mittels der Regeleinheit unter Berücksichtigung des Grey-Box-Modells erfolgt.

Grey-Box-Modelle sind, wie auf den Seiten 245 bis 247 des Buches "Intelligente Verfahren" von D. Schröder, veröffentlicht im Springer-Verlag im Jahr 2010, beschrieben, eine Mischung aus White-Box-Modellen und Black-Box-Modellen, wobei Grey-Box-Modelle Informationen aus physikalischen Gleichungen und Messdaten sowie qualitative Informationen in Form von Regeln beinhalten. Ein Grey-Box-Modell gemäß der vorliegenden Weiterbildung entspricht somit nicht einer genauen theoretischen Analyse des dynamischen Systems, sondern beruht auf einer oder mehreren Annahmen über das dynamische System, beispielsweise auf vereinfachten Reibungsvorgängen und der Vernachlässigung von Fertigungstoleranzen der involvierten mechanischen Bestandteile. Das Grey-Box-Modell ist somit ein parametrisches Modell, in dem die Parameter einer gewissen Modellvorstellung zugeordnet werden können, aber nicht zwingend physikalischen Parametern entsprechen. Somit kann ein einzelner Parameter des Grey-Box-Modells für die unbekannte Masse des beladenen bzw. unbeladenen Transportelements stehen. Es können aber auch mehrere Parameter des Grey-Box-Modells eine Abhängigkeit von der Masse des Transportelements aufweisen, sodass die Masse aus diesen Parametern bestimmt werden kann.

Als physikalisches Modell der Last kann beispielsweise ein einfaches 1-Massen-System oder für eine genauere Bestimmung der Last ein 2-Massen-Modell, d.h. ein Modell des 2-Massen-Schwingers, verwendet werden, um den physikalischen Zusammenhang zwischen Ursache (Kraft) und Wirkung (Bewegung) auszudrücken. Beim 1-Massen-System wird somit das gesamte beladene Transportelement, d.h. beispielsweise das aus Transportelement, Behälter und Flüssigkeit im Behälter bestehende System, als eine einzige starre Masse behandelt. Ein derart vereinfachtes Lastmodell kann beispielsweise verwendet werden, um lediglich den Beladungszustand, d.h. unbeladen oder beladen, bzw. die Anzahl der geladenen Behälter des Transportelements zu bestimmen. In diesem Fall können insbesondere auch weitere Einflüsse wie beispielsweise die Reibung vernachlässigt werden.

Bei dem realistischeren 2-Massen-Modell können beispielsweise Schwingungen und Vibrationen des oder der transportierten Behälter bezüglich des Transportelements und/oder der Flüssigkeit in dem oder den Behältern, die einen Einfluss auf das tatsächliche Bewegungsprofil des Transportelements haben, mit berücksichtigt werden. Eine Vielzahl im Stand der Technik bekannter Modellierungsansätze dynamischer Systeme kann gemäß der vorliegenden Weiterbildung zum Einsatz gelangen. Beispielsweise können blockorientierte nichtlineare Modelle mit dynamischen Übertragungsfunktionen, besonders ein Hammerstein- oder ein Wiener-Modell, oder Kombinationen dieser Modelle verwendet werden. Des Weiteren können künstliche neuronale Netze zur Modellierung des dynamischen Systems verwendet werden. Eine Vielzahl alternativer Modellierungsansätze ist hierbei denkbar und kann je nach Anforderung des zu modellierenden dynamischen Systems zum Einsatz gelangen.

Insbesondere kann das Grey-Box-Modell unter Berücksichtigung einer Temperatur des dynamischen Systems, insbesondere von Führungs- und/oder Lagerelementen des Langstator-Linearmotors und/oder Transportelements, und/oder unter Berücksichtigung eines Verschleißgrades von Führungs- und/oder Lagerelementen des Langstator-Linearmotors und/oder Transportelements und/oder unter Berücksichtigung von Toleranzen mechanischer Bauteile des Langstator Linearmotors und/oder Transportelements gebildet werden.

Temperatureinflüsse, beispielsweise durch Änderung der Temperatur der die Reibung bestimmenden Führungs- und/oder Lagerelemente des Langstator-Linearmotors, beispielsweise von Führungsschienen, und/oder des Transportelements, beispielsweise von Rollen oder Gleitschlitten, mit denen die Transportelemente an den Führungselementen des Langstator-Linearmotors bewegbar gelagert sind, können bei der Modellierung, beispielsweise durch Berücksichtigung einer Temperaturabhängigkeit der Reibung berücksichtigt werden. Das Verfahren kann dabei ein Messen der Temperatur der Führungs- und/oder Lagerelemente mittels eines oder mehrerer Temperatursensoren des Transportsystems umfassen, wobei die gemessenen Temperaturen als Teil des Eingangssignals in die Bestimmung der Last des Transportelements eingehen. Auf Temperatureinflüsse, beispielsweise während der Kaltlaufphase bzw. Warmlaufphase des Transportsystems, kann auch reagiert werden, indem im kalten Zustand des Transportsystems ein größeres Toleranzfenster bezüglich der bestimmten Massen akzeptiert wird und erst im eingelaufenen Zustand des Transportsystems mit großer Genauigkeit gearbeitet wird.

Verschleißeffekte aufgrund der zumindest teilweisen mechanischen Lagerung der Transportelemente an der Transportbahn, insbesondere an Führungselementen des Langstator-Linearmotors, zum Beispiel durch Rollenabnutzung, verändern die Eigenschaften des Linearmotors und die Reibwerte des Transportelements. Um einer Verfälschung des Ergebnisses der Lastbestimmung entgegenzuwirken, kann als Teil der Neuinitialisierung des Transportsystems beim Anfahren des Transportsystems jedes Transportelement im unbeladenen Zustand identifiziert werden und dadurch sich verändernde Parameter und Eigenschaften erkannt und in der Berechnung ausgeglichen werden. Insbesondere können verschleißabhängige Parameter in das Grey-Box-Modell eingehen, deren Wert anhand von Referenzmessungen an unbeladenen Transportelementen wie oben erwähnt und unten genauer beschrieben angepasst werden kann.

Die Modellierung des dynamischen Systems kann somit als Teil einer Kalibrierung des Transportsystems einmalig erfolgen oder nach der Kalibrierung wiederholt angepasst werden, indem in das Modell einfließende Parameter wiederholt, insbesondere bei Referenzmessungen mit unbeladenen Transportelementen, angepasst werden. Das Grey-Box-Modell kann somit, abgesehen von der zu bestimmenden Masse des Transportelements, mit zeitlich konstanten Parametern oder als lernfähiges Modell mit variablen Parametern verwendet werden. Für ein lernfähiges Modell eignet sich dabei insbesondere die Verwendung künstlicher neuronaler Netze.

Toleranzen mechanischer Bauteile des Langstator Linearmotors und/oder des Transportelements können ebenfalls dazu führen, dass sich Motoreigenschaften und Reibwerte an verschiedenen Stellen entlang der Transportbahn und/oder für verschiedene Transportelemente unterschiedlich darstellen. Beispielsweise haben eine eventuelle mechanische Schwergängigkeit und unterschiedlich große Luftspalte einen Einfluss auf die tatsächlichen Bewegungsprofile. Um den Einfluss von Toleranzen zu reduzieren, kann die Lastidentifikation immer im gleichen Bereich der Transportbahn durchgeführt werden und in der Modellierung als Relativmessung zu früheren Messungen erfasst werden. Durch kritische Werte in den Relativwerten können Fehlerfälle detektiert werden. Des Weiteren können die Transportelemente über Identifikationsvorrichtungen verfügen, mittels derer jedes Transportelement eindeutig identifiziert werden kann, sodass die Modellierung des dynamischen Systems spezifisch für jedes Transportelement durchgeführt werden kann. In diesem Fall können Abweichungen aufgrund von Toleranzen der Transportelemente explizit in die jeweilige Modellierung des dynamischen Systems einfließen.

Gemäß einer Weiterbildung kann das Verfahren weiterhin eine zumindest teilweise Modellierung des dynamischen Systems, insbesondere einer Übertragungsfunktion, nach einem Black-Box-Modell umfassen, wobei das Bestimmen des Beladungszustands des Transportelements mittels der Regeleinheit unter Berücksichtigung des Black-Box-Modells erfolgt. Anders als beim Grey-Box-Modell sind beim Black-Box-Modell lediglich unzureichende Kenntnisse über das Systemverhalten vorhanden, sodass lediglich eine experimentelle Analyse durchgeführt werden kann. Die Parameter des Black-Box-Modells haben keinerlei physikalische Bedeutung, sodass auch von einem nichtparametrischen Modell gesprochen wird, welches lediglich das Ein-/Ausgangsverhalten abbildet. In einem solchen Modell kann die zu bestimmende Masse des (beladenen) Transportelements als Teil des Ausgangssignals behandelt werden, während sowohl das erfasste Bewegungsprofil als auch der erfasste zeitliche Verlauf des Laststroms und/oder der Lastspannung als Teil des Eingangssignals behandelt werden. Beim Black-Box-Modell bietet sich insbesondere eine Modellierung mittels eines lernfähigen künstlichen neuronalen Netzes an. Das künstliche neuronale Netz kann als Teil einer Kalibrierung mittels bekannter Massen und vorgegebener Anregungsmuster trainiert werden, um anschließend im Betrieb des Transportsystems zum Bestimmen des Beladungszustands, insbesondere der Last bzw. Masse des Transportelements verwendet zu werden.

Die vorliegende Erfindung ist jedoch nicht auf die beschriebenen Modellierungen beschränkt. Beispielsweise kann ein Black-Box-Modell verwendet werden, bei dem einer oder mehrere Parameter der Übertragungsfunktion eine Massenabhängigkeit zeigen, sodass aus der bestimmten Übertragungsfunktion die Masse bestimmt werden kann. In diesem Fall ist die Massenabhängigkeit der einzelnen Parameter jedoch unbekannt, kann somit anders als bei einem Grey-Box-Modell nicht auf der Grundlage einer teilweisen Systemanalyse in das Modell eingebracht werden. Darüber hinaus ist eine Kombination verschiedener Modellierungen, beispielsweise eines Grey-Box-Modells für die Lastabhängigkeit der Reibung und eines Black-Box-Modells für mechanische Toleranzen sowie für eine Temperaturabhängigkeit der Reibung denkbar.

Gemäß einer Weiterbildung kann das Verfahren weiterhin ein wiederholtes oder kontinuierliches Bestimmen des Beladungszustands, insbesondere der Last, des Transportelements umfassen, wobei ein oder mehrere Parameter des Modells mittels der Regeleinheit aufgrund des bestimmten Beladungszustands angepasst werden. Gemäß dieser Weiterbildung findet somit eine Beobachtung des Beladungszustands bzw. der Last des Transportelements statt. Wie oben bereits erwähnt unterscheidet sich dieses Vorgehen von der einmaligen Modellierung des dynamischen Systems, beispielsweise als Teil einer Kalibrierung des Transportsystems, dadurch, dass die Parameter des zu Grunde gelegten Modells im Verlauf des Betriebs des Transportsystems regelmäßig oder kontinuierlich angepasst werden. Eine solche Anpassung trägt dabei zur Verbesserung der Genauigkeit des Modells bei und kann zudem möglichen zeitlichen Veränderungen des Transportsystems, beispielsweise aufgrund eines zunehmenden Verschleißes, Rechnung tragen.

Insbesondere kann eine Anpassung des oder der Parameter des verwendeten Modells aufgrund wiederholter Messungen mit bekannter Last, d.h. wiederholter Messungen an einem mit einem bestimmten Behälter beladenen Transportelement und insbesondere wiederholter Messungen an einem leeren Transportelement, erfolgen. Die Anpassung der Parameter kann dabei beispielsweise unter Verwendung eines Optimierungsverfahrens, zum Beispiel durch Minimierung der Fehler auf der Grundlage vergangener Messungen unter Berücksichtigung der aktuellen Messung, erfolgen. Dabei kann beispielsweise ein Least-Mean-Square Algorithmus, ein Simplex-Algorithmus oder ein Gradientenabstiegsverfahren eingesetzt werden. Um einer möglichen zeitlichen Entwicklung der Parameter Rechnung zu tragen, kann beispielsweise über die aus einer oder mehreren vorausgehenden Messungen gewonnenen Parameter und die aus der aktuellen Messung gewonnenen Parameter gemittelt werden.

Das wiederholte oder kontinuierliche Bestimmen des Beladungszustands des Transportelements kann außerdem dazu eingesetzt werden, unerwartete Laständerungen eines Transportelements, beispielsweise durch Verlust oder Beschädigung des transportierten Behälters, zu detektieren. Wird beispielsweise eine Veränderung eines Parameters um mehr als einen vorgegebenen Grenzwert bezüglich der vorhergehenden Messung von der Regeleinheit festgestellt, so deutet dies im Allgemeinen auf eine solche unerwartete Laständerung hin.

Eine Anpassung der Parameter des Modells empfiehlt sich besonders bei Verwendung eines Black-Box-Modells, da beim Grey-Box-Modell die dem Modell zu Grunde gelegten physikalischen Zusammenhänge unveränderlich bleiben. Dennoch können auch Parameter eines Grey-Box-Modells durch wiederholtes oder kontinuierliches Bestimmen des Beladungszustands des Transportelements angepasst werden. Wie bereits erwähnt kann eine solche Anpassung besonders wirksam bei Verwendung eines künstlichen neuronalen Netzes zur Modellierung des dynamischen Systems durchgeführt werden. Das verwendete künstliche neuronale Netz lernt somit während des Betriebs des Transportsystems durch wiederholtes oder kontinuierliches Bestimmen der Last des Transportelements.

Während beim einmalig kalibrierten Grey-Box-Modell eine bei der Kalibrierung benötigte Spitzenlast einer Recheneinheit, beispielsweise einer CPU, der Regeleinheit höher ist, ist bei der oben beschriebenen kontinuierlichen Anpassung des Modells die Grundlast der Recheneinheit höher. Die Kalibrierung kann jedoch vor oder während des Anfahrens des Transportsystems bzw. bei geringerer Auslastung durchgeführt werden. Während man bei Verwendung eines einmalig kalibrierten Modells zu einem definierten Zeitpunkt ein festes Ergebnis erhält, kann durch wiederholte oder kontinuierliche Anpassung der Parameter des Modells eine Verbesserung der Genauigkeit des Ergebnisses erzielt werden.

Gemäß einer Weiterbildung kann die Anzahl der Anregungsmuster größer, bevorzugt zehnmal größer, besonders bevorzugt hundertmal größer als die Anzahl der zu bestimmenden Parameter des jeweiligen Modells sein. Dabei können insbesondere ausschließlich unterschiedliche Anregungsmuster verwendet werden, um unabhängige Messergebnisse zu erhalten. Ein hoher Grad an Überbestimmtheit des sich ergebenden Gleichungssystems kann dadurch erzielt werden, dass im Wesentlichen unkorrelierte Anregungsmuster verwendet werden, d.h. Anregungsmuster, für die ein wechselseitiger Kreuzkorrelationskoeffizient besonders klein, insbesondere kleiner als 0,5, ist. Ebenso können Anregungsmuster mit geringer Autokorrelation, d.h. einem Korrelationskoeffizienten kleiner als 0,5, verwendet werden. Dabei können die jeweiligen Korrelationen bezüglich des zeitlichen Verlaufs der vorgegebenen Position, der vorgegebenen Geschwindigkeit, der vorgegebenen Steuerspannung bzw. der vorgegebenen Steuerstromstärke berechnet werden. Im Wesentlichen unkorrelierte Anregungsmuster führen zu möglichst unabhängigen Messungen, welche ein möglichst genaues Bestimmen der Last des Transportelements gestatten. Die Anregungsmuster können in Kenntnis der Motorparameter vorbestimmt und in einer Speichereinheit der Regeleinheit gespeichert sein, oder aber auch in Form parametrisierter Testfunktionen in Abhängigkeit eines Fehlers der bestimmten Last angepasst werden.

Die Anzahl der Anregungsmuster kann dabei derart hoch gewählt werden, dass ein stark überbestimmtes Gleichungssystem von der Regeleinheit aufgestellt wird. Beispielsweise können bei 5 zu identifizierenden Parametern 1000 Gleichungen aufgestellt werden. Dabei ist es nicht zwingend erforderlich, 1000 verschiedene Anregungsmuster vorzugeben. Alternativ oder ergänzend kann ein Anregungsmuster auch mehrere Abschnitte enthalten, beispielsweise Bereiche mit unterschiedlicher Geschwindigkeit und/oder unterschiedlicher Beschleunigung des Transportelements, die jeweils zu eigenen Gleichungen führen. Im Allgemeinen kann ein Anregungsmuster als Abfolge von Beschleunigungs- und Abbremsvorgängen, sowie Abschnitten konstanter Fahrt definiert werden. Dabei richtet sich die Anzahl der verwendeten Anregungsmuster auch nach der jeweiligen Anwendung des beschriebenen Verfahrens. Beispielsweise kann zur reinen Bestimmung, ob das Transportelement leer oder beladen ist bzw. ob das Transportelemente die vorgegebene Anzahl an Behälter befördert, eine geringe Anzahl von Anregungsmustern, möglicherweise ein einziges Anregungsmuster ausreichend sein. Ist eine genaue Identifikation der Masse erforderlich, so führt eine deutlich höhere Anzahl von Anregungsmustern zu einer genaueren Bestimmung der Masse.

In dem Fall, in dem die Anzahl der Anregungsmuster die Anzahl der zu bestimmenden Parameter des Modells übersteigt, kann eine Minimierung eines Fehlers des überbestimmten Modells, insbesondere nach dem Least-Mean-Square Algorithmus, mittels der Regeleinheit erfolgen. Hierbei können lineare Verfahren oder nichtlineare Verfahren, wie beispielsweise der Simplex-Algorithmus oder ein Gradientenabstiegsverfahren angewendet werden. Die Regeleinheit führt somit anhand des überbestimmten Gleichungssystems ein Optimierungsverfahren durch, welches den Fehler aller Gleichungen minimiert.

Wenigstens eines der Anregungsmuster kann einer Bewegung des Transportelements mit konstanter Geschwindigkeit entsprechen, und/oder wenigstens ein Anregungsmuster kann einer beschleunigten Bewegung des Transportelements entsprechen. Bei einer Bewegung des Transportelements mit konstanter Geschwindigkeit wirkt sich die Masse des Transportelements auf die Reibungskraft und somit auf die zur Aufrechterhaltung der konstanten Geschwindigkeit benötigte Vorschubkraft aus. Bei einer beschleunigten Bewegung des Transportelements tritt zusätzlich zu der masseabhängigen Reibungskraft auch noch die Wirkung der trägen Masse auf. Beide Bewegungen sind somit prinzipiell geeignet, eine Last des Transportelements zu bestimmen.

Die Reibung in dem mechanischen System, das durch die zumindest teilweise mechanische Lagerung der Transportelemente an der Transportbahn, beispielsweise mittels Rollen und / oder Gleitschlitten, gebildet wird, umfasst im Allgemeinen sowohl einen lastabhängigen Anteil aufgrund der masseabhängigen Normalkraft als auch einen geschwindigkeitsabhängigen Anteil. Wegen des geschwindigkeitsabhängigen Anteils lassen sich somit auch Anregungsmuster mit konstanter Fahrt bei verschiedenen Geschwindigkeiten zum unabhängigen Bestimmen der Last des Transportelements verwenden. Beispielsweise kann das Anregungsmuster einer Treppenfunktion in einem Geschwindigkeit-Zeit-Verlauf entsprechen, wobei bei jeder Geschwindigkeit dieses Verlaufs eine separate Bestimmung der Last erfolgen kann.

Wegen des Einflusses der trägen Masse führen Anregungsmuster mit unterschiedlichen Beschleunigungen zu unabhängigen Bestimmungen der Last. Dementsprechend kann das Anregungsmuster auch einer Treppenfunktion in einem Beschleunigung-Zeit-Verlauf entsprechen. In diesem Fall kann bei jeder Beschleunigung dieses Verlaufs eine separate Bestimmung der Last erfolgen. Es versteht sich, dass auch Kombinationen der oben beschriebenen Anregungsmuster denkbar sind. Darüber hinaus können die Anregungsmuster auch im Hinblick auf eine zur Verfügung stehende Messstrecke des Transportsystems ausgewählt werden, sodass die Bewegungsprofile der Transportelemente innerhalb der Messstrecke umgesetzt werden können. Um einen möglichst geringen Einfluss auf den Durchsatz des Transportsystems zu haben, können die Anregungsmuster auch derart gewählt werden, dass die Beschleunigung bzw. konstante Fahrt bei einer der üblichen Betriebsgeschwindigkeit nahen Geschwindigkeit erfolgt. Auf diese Weise kann ein zuverlässiges Erfassen der Last im Normalbetrieb der Anlage erfolgen.

Die Anregungsmuster können auch derart gewählt werden, dass an unterschiedlichen Stellen entlang der Transportbahn wiederholt Messungen durchgeführt werden. Damit kann kontinuierlich ein Beladungszustand eines Transportelements überwacht werden, sodass fehlende oder defekte Behälter aufgrund der sich ergebenden Massenänderung wirksam detektiert werden können. Insbesondere können die Messungen in einem Bereich der Transportbahn durchgeführt werden, der eine Steigung aufweist. In diesem Fall wird zum Überwinden des entsprechenden Teils der Gewichtskraft der Last bereits bei konstanter Fahrt eine entsprechende Vorschubkraft benötigt. Zusätzlich zu der lastabhängigen Reibung und dem Einfluss der trägen Masse wirkt an nicht ebenen Bereichen der Transportbahn somit auch der Einfluss der schweren Masse, der ebenso zur unabhängigen Bestimmung der Last des Transportelements verwendet werden kann. Dazu kann die bekannte Steigung als Parameter in ein entsprechendes Grey-Box-Modell einfließen.

Die oben genannten Aufgaben werden auch durch ein Transportsystem zum Transport von Lasten gelöst, umfassend: einen, insbesondere synchronen, Langstator-Linearmotor, eine Vielzahl von Transportelementen, und eine Regeleinheit, die dazu ausgebildet ist, die Transportelemente mittels des Langstator-Linearmotors individuell gesteuert entlang einer Transportbahn des Transportsystems zu bewegen, wobei das Transportsystem weiterhin eine Positionserfassungsvorrichtung und/oder eine Geschwindigkeitserfassungsvorrichtung, insbesondere entlang zumindest einer Teilstrecke der Transportbahn, zum Erfassen eines Bewegungsprofils eines Transportelements aufweist, wobei der Langstator-Linearmotor eine integrierte Messvorrichtung zum Erfassen eines zeitlichen Verlaufs eines Laststroms und/oder einer Lastspannung, mit dem und/oder mit der die Regeleinheit den Langstator Linearmotor betreibt, aufweist, und wobei die Regeleinheit dazu ausgebildet ist, eine Vielzahl von einzeln ansteuerbaren Elektromagneten des Langstator-Linearmotors nach wenigstens einem Anregungsmuster anzusteuern, wobei jedes Anregungsmuster einem Bewegungsprofil des Transportelements entspricht, und einen Beladungszustand, insbesondere eine Last, des Transportelements und/oder einen Verschleiß einer Lagerung des Transportelements an der Transportbahn in Abhängigkeit von wenigstens einem erfassten Bewegungsprofil und wenigstens einem erfassten zeitlichen Verlauf des Laststroms und/oder der Lastspannung zu bestimmen.

Hierbei können dieselben Variationen und Weiterbildungen, die oben im Zusammenhang mit dem erfindungsgemäßen Verfahren zur Identifikation einer Last eines Transportelements beschrieben wurden, auch auf das Transportsystem zum Transport von Lasten angewendet werden. Insbesondere können die oben beschriebenen Weiterbildungen des Langstator-Linearmotors sowie der Transportelemente auf das Transportsystem angewendet werden. Der magnetische Linearantrieb des Langstator-Linearmotors kann als synchroner oder als asynchroner Linearmotor mit wenigstens einem Linearmotorstrang in Form eines Langstators ausgebildet sein, der mit einer Vielzahl von elektrischen Wicklungen in Form von einzeln oder blockweise ansteuerbaren Elektromagneten, d.h. Spulen, ausgestattet ist. Um eine magnetische Wechselwirkung zwischen einem Transportelement und den einzeln ansteuerbaren Elektromagneten des Langstator-Linearmotors zu ermöglichen, kann das Transportelement als passives Transportelement mit wenigstens einem Permanentmagneten und/oder nicht schaltenden Elektromagneten ausgestattet sein.

Des Weiteren kann das Transportelement dazu ausgebildet sein, Behältergebinde oder einen Behälter, insbesondere einen oder mehrere mit einer Flüssigkeit befüllte Behälter oder Behältergebinde, zu transportieren. Behälter können dabei insbesondere Flaschen oder Dosen sein. Wie erwähnt können auch eine oder mehrere Preformen transportiert werden. Zum Transport des Behälters kann das Transportelement mit einer geeigneten Halteeinrichtung, zum Beispiel in Form eines Greifelements, ausgestaltet sein. Insbesondere sind Greifelemente zum formschlüssigen oder kraftschlüssigen Greifen eines Halsbereichs der Behälter, zum Beispiel beim sogenannten Neckhandling von Kunststoffflaschen, vorstellbar, wobei der gehaltene Behälter beim formschlüssigen Greifen um seine Längsachse in dem Greifelement drehbar gelagert ist. Das Transportelement kann als Läufer, Puck, Schlitten, Shuttle oder dergleichen ausgebildet sein, welcher durch geeignete Wechselwirkung mit dem Langstator-Linearmotor bewegt wird.

Weiterhin kann das Transportelement eine eindeutige Identifikationseinheit, zum Beispiel in der Form eines Strichcodes, auslesbaren Speicherchips, eines aufgedruckten, aufgeklebten und/oder eingravierten alphanumerischen Codes, etc., umfassen, wobei durch eine oder mehrere geeignete Identifikationserfassungsvorrichtungen entlang der Transportbahn eine Identifikation des Transportelements, welches die entsprechende Identifikationserfassungsvorrichtung passiert, ermöglicht wird. Die Identifikationseinheit des Transportelements kann insbesondere wie oben beschrieben zur spezifischen Modellierung des aus diesem Transportelement und dem Langstator-Linearmotor bestehenden dynamischen Systems verwendet werden.

Zum Führen der Transportelemente entlang der Transportbahn können das Transportsystem, und insbesondere die Transportbahn, eine oder mehrere Führungsschienen und/oder einen oder mehrere Führungskanäle aufweisen. An diesen Führungselementen können die Transportelemente mittels einer oder mehrerer geeignet angeordnete Führungsrollen, Gleitlager und/oder einen Führungsstift gelagert sein. Bei dieser zumindest teilweise mechanischen Lagerung treten die oben beschriebenen Reibungskräfte auf.

Erfindungsgemäß umfasst das Transportsystem eine Positionserfassungsvorrichtung und/oder eine Geschwindigkeitserfassungsvorrichtung, mit der sich ein Weg-Zeit-Profil bzw. ein Geschwindigkeit-Zeit-Profil der Bewegung des Transportelements erfassen lässt. Dabei kann die Positionserfassungsvorrichtung bzw. die Geschwindigkeitserfassungsvorrichtung als integrierte Messvorrichtung des Langstator-Linearmotors ausgebildet sein. Alternativ oder ergänzend können Messvorrichtungen zum Bestimmen der Position und/oder Geschwindigkeit der Transportelemente als Teil der jeweiligen Transportelemente vorgesehen sein.

Beispielsweise können zumindest entlang einer Teilstrecke der Transportbahn Sensoren angeordnet sein, die dazu ausgebildet sind, die Position und/oder Geschwindigkeit eines Transportelements im Bereich dieser Sensoren zu bestimmen. Dabei können die Sensoren als optischer Sensor, elektrischer Sensor, elektromagnetischer Sensor oder mechanischer Sensor ausgebildet sein, wobei zum Beispiel durch Messen einer Lichtreflexion an einem Reflektorelement des Transportelements, durch Induktion eines elektromagnetischen Signals aufgrund der Bewegung des Transportelements, durch Änderung des elektrischen Widerstandes des Sensors unter Ausnutzung eines magnetoresistiven Effekts, zum Beispiel aufgrund einer durch die Bewegung des ein magnetisches Referenzelement umfassenden Transportelements verursachten magnetischen Flussänderung, oder durch lokale Druckmessung aufgrund des Gewichts des Transportelements die Position des Transportelements bestimmt werden kann. Ein elektromagnetischer Sensor kann dabei auch als Hallsensor ausgebildet sein. Hallsensoren gestatten beispielsweise eine Lokalisierung eines Transportelements mit einer Genauigkeit von 0,2 mm bis 1 mm. Als Sensoren können ebenfalls magnetostriktive Wegaufnehmer verwendet werden, die die Position des Transportelements mithilfe der Magnetostriktion ermitteln. Dabei wird als Messelement ein Wellenleiter aus einem magnetostriktiven Material entlang der Messstrecke angeordnet, durch den ein Leiter gefädelt wird. Ein an den Transportelementen entsprechend angeordneter Permanentmagnet führt als Positionsgeber zur Magnetostriktion des Wellenleiters, die eine sich nach beiden Seiten ausbreitende, mechanische Welle erzeugt. Aus der Ausbreitung der Welle kann dabei die Position des Transportelements bestimmt werden.

Weitere mögliche Sensoren sind regelmäßig an der Transportbahn angeordnete Näherungssensoren induktiver oder kapazitiver Art, sowie als lineare bzw. Drehgeber ausgebildete Inkrementalgeber oder absolute Wertgeber. Bei Inkrementalgebern kann es erforderlich sein, dass durch eine Referenzfahrt zunächst die absolute Position der Transportelemente beim Anfahren des Transportsystems bestimmt wird. Mit induktiven Sensoren kann darüber hinaus aus der Amplitude des induzierten Strompulses bzw. Spannungspulses auf die Geschwindigkeit des Transportelements rückgeschlossen werden. Ebenso kann aus den Messdaten von Inkrementalgebern die Geschwindigkeit des Transportelements bestimmt werden.

Bei den im Stand der Technik bekannten Positionserfassungsvorrichtungen bzw. Geschwindigkeitserfassungsvorrichtungen ist im Allgemeinen ein Teil der Vorrichtung als Teil der Transportelemente ausgebildet, während ein weiterer Teil der Vorrichtung als Teil der Transportbahn bzw. des Langstator-Linearmotors ausgebildet ist. Beispielsweise kann eine Vielzahl von Sensoren, insbesondere regelmäßig, entlang der Transportbahn bzw. einer Teilstrecke der Transportbahn angeordnet sein, während ein von den Sensoren detektierbares Element, beispielsweise ein Referenzmagnet, eine optische Markierung oder ein Reflektor, als Teil der Transportelemente vorgesehen ist. Umgekehrt können Sensoren als Teil der Transportelemente vorgesehen sein, wobei zu detektierende Elemente, beispielsweise eine periodische Anordnung optischer Markierungen oder von Referenzmagneten, entlang der Messstrecke angeordnet sind. In diesem Fall kann eine Übertragungsvorrichtung, beispielsweise eine Signalvorrichtung, als Teil der Transportelemente vorgesehen sein, mittels derer Zählpulse bzw. Messdaten an die Regeleinheit übertragen werden können. Alternativ oder zusätzlich können die Transportelemente eine Signaleinheit aufweisen, welche ein oder mehrere Positionssignale, die von räumlich getrennten Signaleinheiten der Regeleinheit des Transportsystems gesendet werden, detektieren, um daraus, zum Beispiel durch Laufzeitmessungen, die Position des Transportelements entlang der Transportbahn zu bestimmen. Diese Signaleinheit des Transportelements kann insbesondere als RFID-Chip ausgebildet sein.

Die von den Sensoren der Transportelemente und/oder des Langstator-Linearmotors bzw. der Transportbahn erfassten Positionen und/oder Geschwindigkeiten der Transportelemente werden über entsprechende Radioantennen oder Signalleitungen an die Regeleinheit des Transportsystems weitergeleitet, die diese wie oben beschrieben verarbeitet.

Darüber hinaus ist der Langstator-Linearmotor gemäß der vorliegenden Erfindung mit einer integrierten Messvorrichtung zum Erfassen eines zeitlichen Verlaufs eines Laststroms und/oder einer Lastspannung ausgestattet, die an den einzelnen Elektromagneten bzw. Spulen des Langstators anliegt. Hierzu können an jeder einzelnen Spule oder jedem Spulenblock ein an sich bekanntes Voltmeter bzw. Ampèremeter oder sonstige im Stand der Technik bekannte Vorrichtungen zur Messung einer elektrischen Spannung bzw. Stromstärke vorgesehen sein, wobei die Messdaten ebenfalls an die Regeleinheit übermittelt werden. Aus den übermittelten Bewegungsprofilen und zeitlichen Verläufen der elektrischen Last der Spulen des Langstator-Linearmotors berechnet die Regeleinheit wie oben im Detail beschrieben den Beladungszustand, insbesondere die Last des Transportelements.

Wie oben beschrieben kann die Regeleinheit eine oder mehrere Prozessoreinheiten umfassen, mittels derer die oben beschriebenen Rechnungen durchgeführt werden. Die Regeleinheit kann insbesondere als speicherprogrammierbare Steuereinheit ausgebildet sein. Darüber hinaus kann die Regeleinheit einen Servoverstärker bzw. Servoregler umfassen oder als solcher ausgebildet sein. Ein Servoverstärker bzw. Servoregler ist dabei dazu ausgebildet, das vorgegebene oder berechnete Steuersignal in ein geeignetes Eingangssignal für den Langstator-Linearmotor umzusetzen. Insbesondere kann die Regeleinheit dazu ausgebildet sein, dreiphasige Spannungsimpulse für die Spulen des Langstator Linearmotors zu erzeugen. Hierbei sind insbesondere die oben beschriebenen Weiterbildungen der Regeleinheit sowie des Servoreglers anwendbar.

Das Transportsystem kann weiterhin einen oder mehrere Temperatursensoren aufweisen, die dazu ausgebildet sind, eine Temperatur von Führungs- und/oder Lagerelementen des Transportsystems zu messen und an die Regeleinheit zu übermitteln. Die gemessenen Temperaturen können dann wie oben beschrieben von der Regeleinheit berücksichtigt werden, um beispielsweise eine Temperaturabhängigkeit der Reibung bei der Modellierung des dynamischen Systems einfließen zu lassen.

Wie oben beschrieben kann die Regeleinheit des Weiteren eine Speichereinheit zum Speichern einer Vielzahl von vorgegebenen Anregungsmustern, beispielsweise in Form entsprechender Abfolgen von Steuersignalen, aufweisen, wobei die üblichen im Stand der Technik bekannten Speicher zum Einsatz kommen können.

Die Transportbahn des Transportsystems kann eine spezielle Teilstrecke zum Erfassen des Bewegungsprofils der Transportelemente aufweisen, wobei insbesondere lediglich entlang dieser Teilstrecke die oben erwähnten Sensoren angeordnet sein können. Alternativ können jedoch Sensoren bzw. Messelemente entlang der gesamten Transportbahn angeordnet sein, sodass eine Erfassung des Bewegungsprofils an einer beliebigen Stelle der Transportbahn möglich ist. Diese Weiterbildung ist insbesondere bei Verwendung des oben beschriebenen Verfahrens zum wiederholten und kontinuierlichen Bestimmen der Last von Vorteil.

Gemäß einer Weiterbildung kann die Teilstrecke gerade und eben ausgebildet sein, wobei wenigstens ein Anregungsmuster einer Bewegung des Transportelements mit konstanter Geschwindigkeit und/oder wenigstens ein Anregungsmuster einer beschleunigten Bewegung des Transportelements entspricht. Bei einer geraden und ebenen Teilstrecke vereinfacht sich das dynamische System dahingehend, dass die durch die Masse des Transportelements wirkende Gewichtskraft senkrecht auf der Transportbahn steht. Da die Teilstrecke gerade ist, treten darüber hinaus keine Fliehkräfte auf, die insbesondere ein Schwingen der beförderten Last, beispielsweise durch Schwappen einer Flüssigkeit in dem beförderten Behälter, bewirken können. Bei einer Bewegung mit konstanter Geschwindigkeit wird wie oben beschrieben insbesondere der Einfluss der Masse auf die Reibung bestimmt, während bei einer beschleunigten Bewegung zusätzlich der Einfluss der trägen Masse auftritt.

Gemäß einer alternativen Weiterbildung kann die Teilstrecke in einer vertikalen Richtung, insbesondere mit variierender Krümmung, gekrümmt sein, wobei optional wenigstens ein Anregungsmuster einer Bewegung des Transportelements mit konstanter Geschwindigkeit entspricht. Eine vertikale Richtung ist hier und im Folgenden im Sinne der Richtung der Gewichtskraft zu verstehen. Da die Teilstrecke nach dieser Weiterbildung in der vertikalen Richtung gekrümmt ist, weist zumindest ein Teilstück der Teilstrecke eine Steigung oder ein Gefälle auf. Somit tritt wie oben beschrieben auch der Einfluss der schweren Masse hinzu, wodurch sich weitere Möglichkeiten für unabhängige Messungen ergeben. Die Krümmung der Teilstrecke führt dabei dazu, dass sich die Steigung ändert, wodurch der Anteil der Gewichtskraft der Masse des Transportelements, der von der Vorschubkraft überwunden werden muss, variiert.

Eine variierende Krümmung gestattet den Übergang von der Ebene in eine Steigung und zurück in eine, höher gelegene Ebene, bzw. umgekehrt. Teilstrecken mit variierender Krümmung können dabei insbesondere als Teil des Transportsystems vorgesehen sein, um einen Höhenunterschied zu überwinden. Bevorzugt kann das erfindungsgemäße Transportsystem somit derart ausgebildet sein, dass an bereits existierenden Teilstrecken zur Überwindung eines Höhenunterschieds die oben beschriebenen Messungen zur Bestimmung der Last der Transportelemente durchgeführt werden. Um eine Schrägstellung der transportierten Last zu vermeiden, können Greifelemente der Transportelemente, mit denen Behälter gehalten werden, drehbar ausgebildet sein.

Die vorliegende Erfindung gestattet das zuverlässige und präzise Bestimmen eines Beladungszustands bzw. einer Last eines Transportelements ohne zusätzlich erforderliche Komponenten. Im Allgemeinen erlaubt die vorliegende Erfindung das Bestimmen verschiedener wichtiger Parameter für Transportelemente wie die Masse und die Reibung. Lediglich eine entsprechend ausgebildete Regeleinheit ist hierzu erforderlich. Somit können gegenüber den im Stand der Technik bekannten Systemen Komponenten eingespart werden, was wiederum zu Kosteneinsparungen führt. Da integrierte Messvorrichtungen des Transportsystems verwendet werden, wird die Flexibilität der Bestimmung der Last erhöht, da die Messung an verschiedenen Orten des Transportsystems vorgenommen werden kann. Darüber hinaus können die Anregungsmuster derart gewählt werden, dass die Messungen keine wesentliche Einschränkung der Anlagenleistung mit sich bringen. Insbesondere entfällt die sonst übliche Wartezeit bei externer Messsensorik. Schließlich ist keine mechanische Justage aufgrund verschiedener Sorten bzw. Garniturenteile nötig. Die vorliegende Erfindung nutzt somit in vorteilhafter Weise im Allgemeinen vorhandene Vorrichtungen eines Langstator-Linearmotorsystems aus, um die Last, d.h. Masse beförderter Behälter im laufenden Betrieb der Anlage zu bestimmen.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

Figur 1 zeigt eine schematische Darstellung eines Transportsystems mit Langstator-Linearmotor gemäß der vorliegenden Erfindung.

Figur 2zeigt ein Verfahren zur Identifikation einer Last eines Transportelements gemäß der vorliegenden Erfindung.

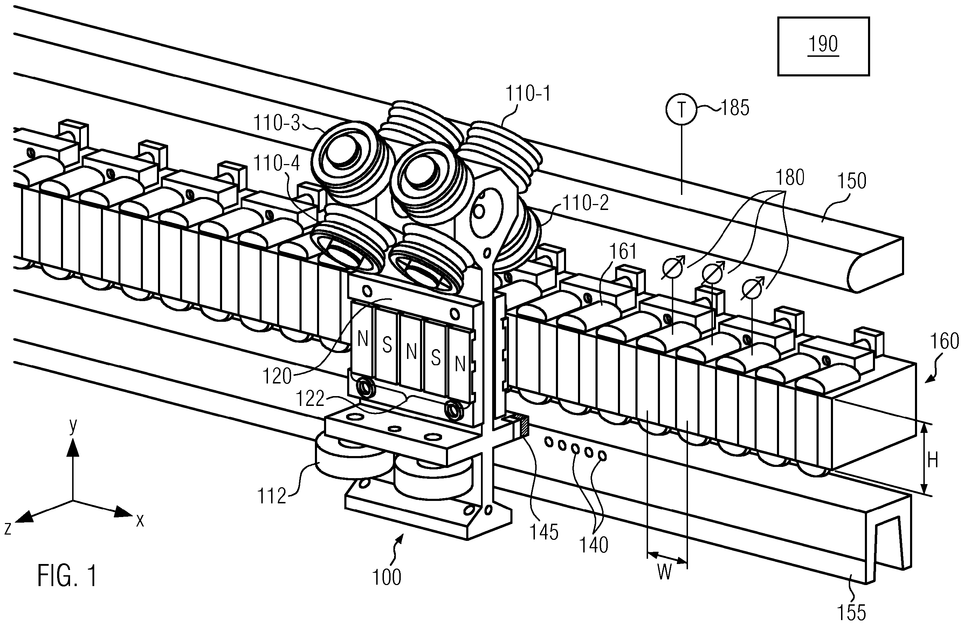

Figur 1 zeigt eine schematische Darstellung eines Transportsystems mit einem Langstator-Linearmotor zum Erfassen einer Last eines Transportelements gemäß der vorliegenden Erfindung. Die hier dargestellte exemplarische Weiterbildung zeigt eine spezifische Anordnung des Transportsystems, bei der ein Langstator 160 des Linearmotors seitlich von einem senkrecht ausgerichteten Sekundärteil, d.h. Reaktionselement, 120 eines Transportelements 100 angeordnet ist. Es versteht sich jedoch, dass die vorliegende Erfindung nicht auf eine derartige senkrechte Anordnung beschränkt ist, sondern ebenso auf eine waagerechte Anordnung des Sekundärteils angewendet werden kann. Ebenso können beidseitig des Sekundärteils 120 Langstatoren 160 vorgesehen sein. Die hier dargestellte Weiterbildung dient daher lediglich der Illustration der vorliegenden Erfindung, ohne die spezielle Weiterbildung des Langstator-Linearmotors sowie des Transportelements einschränken zu wollen.

In der Figur 1 ist stellvertretend für die Vielzahl von Transportelementen ein Transportelement 100 schematisch dargestellt. Das hier exemplarisch dargestellte Transportelement 100 ist über Laufrollen 110-1 bis 110-4 beweglich an einer oberen Führungsschiene 150 gelagert. Zusätzlich weist das nicht limitierende Transportelement der Figur 1 Führungsrollen 112 auf, mit denen das Transportelement an einer unteren Führungsschiene 155 geführt wird. Dabei unterliegen sowohl die Laufrollen 110-1 bis 110-4 als auch die Führungsrollen 112 einer Reibung mit den jeweiligen Führungsschienen, wobei diese aufgrund der Schrägstellung der Laufrollen lastabhängig ist. Der Übersichtlichkeit halber sind in der schematischen Darstellung der Figur 1 lediglich die hinteren Führungsschienen 150 und 155 sowie der hintere Langstator 160 gezeigt. Es versteht sich jedoch, dass wie oben erwähnt entsprechende vordere Führungsschienen und ein vorderer Langstator zusätzlich vorgesehen sein können. Eine Vielzahl von Variationen der dargestellten Lagerung des Transportelements 100 ist denkbar und mit den oben beschriebenen Weiterbildungen der vorliegenden Erfindung vereinbar.

Wie in der Figur 1 schematisch dargestellt weist der Langstator 160 eine Reihe von magnetischen Wicklungen, d.h. Spulen 161, auf, deren Eisenkerne eine Höhe H senkrecht zur Bewegungsrichtung, d.h. in Y-Richtung, besitzen. Die Spulen 161 sind dabei in einem Abstand W voneinander entlang des Langstators angeordnet. Die magnetischen Wechselfelder der Spulen 161 wechselwirken mit den mit abwechselnder Polung N bzw. S in einer Reihe 122 angeordneten Permanentmagneten des Sekundärteils 120, welches in einer vertikalen Konfiguration gezeigt ist. Anstelle der hier dargestellten, nicht limitierenden Sequenz abwechselnder Polungen kann auch ein einzelner Magnet als Magnet des Sekundärteils 120 verwendet werden.

Des Weiteren ist in der exemplarischen Weiterbildung des Transportelements der Figur 1 ein Permanentmagnet als Referenzmagnet 145 an dem Sekundärteil 120 des Transportelements angeordnet. Bei der Bewegung des Transportelements 100 wird dieser Referenzmagnet 145 an einer Reihe von regelmäßig angeordneten Sensoren 140, beispielsweise induktiven Sensoren, die entlang der unteren Führungsschiene 155 angeordnet sind, vorbei bewegt. Der Übersichtlichkeit halber ist in Figur 1 lediglich eine geringe Anzahl der Sensoren 140 dargestellt, wobei die Sensoren 140 zumindest entlang einer Teilstrecke des Transportsystems oder gar entlang des gesamten Transportsystems vorgesehen sein können. Aufgrund der Bewegung des Transportelements 100 erfahren die Sensoren 140 eine magnetische Flussänderung aufgrund des bewegten Referenzmagneten 145, mittels derer eine Position und/oder eine Geschwindigkeit des bewegten Transportelements bestimmt werden kann. Beispielsweise können im Abstand von 10 bis 15 mm magnetoresistive Sensoren angeordnet sein, mittels derer die Position des Transportelements kontinuierlich bestimmt werden kann. Hierzu übermitteln die Sensoren 140 kontinuierlich oder in periodischen Zeitabständen ihre Messsignale an die Regeleinheit 190 des Transportsystems, die aus den Messsignalen eines oder mehrerer Sensoren 140 die Position und/oder Geschwindigkeit des Transportelements 100 berechnet. Die exemplarisch dargestellten Sensoren 140 bilden somit eine integrierte Positionserfassungsvorrichtung und/oder eine integrierte Geschwindigkeitserfassungsvorrichtung, mittels derer die Regeleinheit 190 wie oben beschrieben ein Bewegungsprofil des Transportelements 100 erfasst.

In der Weiterbildung der Figur 1 ist des Weiteren schematisch eine integrierte Messvorrichtung 180 des Langstators 160 zum kontinuierlichen oder periodischen Messen der an den Spulen 161 tatsächlich anliegenden Lastspannung bzw. des durch die Spulen 161 tatsächlich fließenden Laststroms gezeigt. Eine solche Messvorrichtung zur kontinuierlichen Erfassung der elektrischen Last eines Langstators ist im Allgemeinen in den Langstator integriert, um eine Regelung der Spulenansteuerung über Feedback an die Regeleinheit 190 zu ermöglichen. Die Messvorrichtung 180, von der in Figur 1 lediglich einige Sensoren stellvertretend dargestellt sind, übermittelt somit die gemessenen Lastspannungen und/oder Lastströme an die Regeleinheit 190, die wie oben beschrieben entweder die tatsächlichen elektrischen Lastsignale an den Spulen entsprechend einem vorgegebenen Bewegungsprofil anpasst oder die tatsächlichen elektrischen Lastsignale aufgrund vorgegebener Steuersignale erfasst.

Aus den übermittelten Messdaten der Positionserfassungsvorrichtung 140 und/oder Geschwindigkeitserfassungsvorrichtung 140 sowie der integrierten Messvorrichtung 180 bestimmt die Regeleinheit 190 durch Ansteuern des Langstator-Linearmotors 160 nach wenigstens einem Anregungsmuster wie oben beschrieben den Beladungszustand bzw. die Gesamtmasse des Transportelements 100. Beispielsweise kann das Transportelement 100 eine Greifvorrichtung (nicht dargestellt) zum Transportieren eines Behälters (nicht dargestellt) besitzen, wobei die Regeleinheit 190 durch Abzug der bekannten Masse des unbeladenen Transportelements 100 die Masse des transportierten Behälters und/oder die Anzahl der mitgeführten Behälter berechnen kann. Dabei kann die Regeleinheit 190 wie oben beschrieben eine Temperatur der Führungsschienen 150 berücksichtigen, die wie in der Figur 1 dargestellt mittels einer Temperatursonde 185 gemessen wird. Die gemessene Temperatur kann dabei insbesondere als bekannte Temperaturabhängigkeit einer Rollreibung der Lagerrollen 110-1 bis 110-4 an der Führungsschiene 150 in ein Grey-Box-Modell einfließen, welches die Regeleinheit 190 zum Bestimmen der Last des Transportelements 100 verwendet.

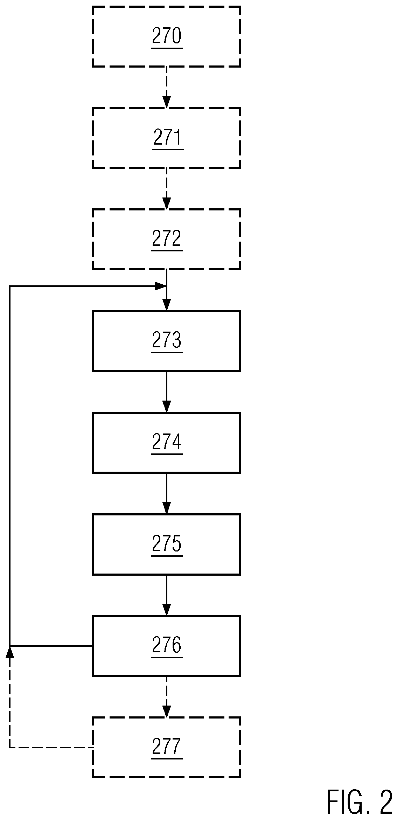

In der Figur 2 ist ein Verfahren zur Identifikation einer Last und/oder eines Verschleißes eines Transportelements gemäß der vorliegenden Erfindung gezeigt. Dabei sind die gestrichelt umrandeten Verfahrensschritte optional.

In Schritt 270 können zunächst eine Vielzahl von Anregungsmustern vorgegeben bzw. berechnet werden, welche bei der Anregung des dynamischen Systems aus Langstator-Linearmotor und Transportelement von der Regeleinheit verwendet werden können. Wie oben beschrieben können diese Anregungsmuster insbesondere verschiedene Bewegungsprofile des Transportelements oder zeitliche Verläufe von Steuersignalen darstellen. Im Allgemeinen werden die Anregungsmuster von einem Entwickler oder Benutzer des Transportsystems vorgegeben. Zusätzlich erfolgt in Schritt 271 eine Modellierung des dynamischen Systems mittels eines Grey-Box-Modells oder eines Black-Box-Modells oder einer Kombination dieser Modelle. Dabei können bekannte physikalische Zusammenhänge und Motorparameter in die Modellierung des dynamischen Systems einfließen. Auch dieser Schritt wird üblicherweise von einem Entwickler oder Benutzer des Transportsystems, insbesondere vor Inbetriebnahme des Transportsystems, vorgenommen.

In Schritt 272 kann zunächst eine Kalibrierung des Transportsystems anhand vorgegebener Anregungsmuster und bekannter Massen erfolgen, wobei das jeweilige Modell wie oben beschrieben konditioniert wird. Die Kalibrierung kann vor Inbetriebnahme der Anlage oder bei jedem Anfahren der Anlage als Teil einer Initialisierung durchgeführt werden. Als Teil der Kalibrierung können auch wie oben beschriebenen individuelle Reibungswerte der Lagerungen der Transportelemente bestimmt werden. Hierbei können die Identifikationseinheiten der Transportelemente zur eindeutigen Zuordnung der Reibungswerte bzw. der Verschleißgrade der Lagerelemente verwendet werden.

Nach Abschluss der Kalibrierung wird der Betrieb der Anlage aufgenommen, wobei während des üblichen Betriebs eine Anregung des dynamischen Systems aus Langstator-Linearmotor und Transportelement durch Ansteuern des Langstator-Linearmotors mittels der Regeleinheit nach wenigstens einem Anregungsmuster in Schritt 273 erfolgt. Die Anregung des dynamischen Systems kann dabei insbesondere wie oben beschrieben eine Anpassung der elektrischen Last bzw. der Steuersignale derart umfassen, dass das tatsächliche Bewegungsprofil des Transportelements im Wesentlichen einem vorgegebenen Bewegungsprofil entspricht. Der Anregungsschritt 273 kann dabei insbesondere eine Anregung mit einer Vielzahl von Anregungsmustern umfassen.

Anschließend wird in Schritt 274 das tatsächliche Bewegungsprofil des Transportelements mittels einer Positionserfassungsvorrichtung und/oder einer Geschwindigkeitserfassungsvorrichtung erfasst. In Schritt 275 wird darüber hinaus der zeitliche Verlauf des tatsächlichen Laststroms und/oder der tatsächlichen Lastspannung mittels einer integrierten Messvorrichtung des Langstator-Linearmotors erfasst. Aus dem erfassten Bewegungsprofil und dem erfassten zeitlichen Verlauf der elektrischen Last konstruiert die Regeleinheit auf der Grundlage der Anregungsmuster ein im Allgemeinen überbestimmtes Gleichungssystem, aus dem in Schritt 276 der Beladungszustand und insbesondere die Masse des Transportelements berechnet wird. Anschließend kann das Verfahren zu Schritt 273 zurückkehren. Optional kann jedoch in Schritt 277 das Ergebnis der Lastbestimmung aus Schritt 276 verwendet werden, um das in Schritt 271 erzeugte Modell, d.h. einen oder mehrere Parameter dieses Modells, anzupassen. Denkbar ist hier auch eine Berücksichtigung und Überwachung der auftretenden Reibung bei den Lagerelementen. In diesem Fall kehrt das Verfahren erst nach Anpassung des Modells zur Anregung des dynamischen Systems in Schritt 273 zurück. Die Sequenz aus Anregung, Erfassung von Bewegungsprofil und elektrischer Last sowie Lastbestimmung mit optionaler Anpassung des Modells kann dabei, je nach Bedarf, wiederholt ausgeführt werden, um einen Beladungszustand des Transportelements zu überwachen, wodurch insbesondere eine plötzliche Veränderung der Last des Transportelements durch Beschädigung oder Verlust eines transportierten Behälters detektiert werden kann. Ebenso kann durch wiederholtes Durchführen des beschriebenen Verfahrens eine Genauigkeit des Modells erhöht werden, was die Genauigkeit der Massenbestimmung des mitbeförderten Behälters erhöht. Das Verfahren kann dabei ohne wesentlichen Eingriff in den regulären Betrieb der Anlage und im Allgemeinen ohne zusätzliche Sensoren eingesetzt werden.

## Patentansprüche

1. Verfahren zur Identifikation einer Last und/oder eines Verschleißes eines Transportelements (100) eines Transportsystems mit einer Vielzahl von Transportelementen (100), einem, insbesondere synchronen, Langstator-Linearmotor (160) und einer Regeleinheit (190) zum individuell gesteuerten Bewegen der Transportelemente entlang einer Transportbahn des Transportsystems mittels des Langstator-Linearmotors, umfassend:
Anregung (273) eines aus dem Langstator-Linearmotor (160) und dem Transportelement (100) bestehenden dynamischen Systems durch Ansteuern des Langstator-Linearmotors mittels der Regeleinheit (190) nach wenigstens einem Anregungsmuster, wobei jedes Anregungsmuster einem Bewegungsprofil des Transportelements entlang der Transportbahn entspricht;
Erfassen (274) des Bewegungsprofils des Transportelements (100) entlang der Transportbahn aufgrund des wenigstens einen Anregungsmusters mittels einer Positionserfassungsvorrichtung (140, 145) und/oder Geschwindigkeitserfassungsvorrichtung (140, 145) des dynamischen Systems;
Erfassen (275) eines zeitlichen Verlaufs eines Laststroms und/oder einer Lastspannung, mit dem und/oder mit der die Regeleinheit (190) den Langstator-Linearmotor (160) gemäß dem wenigstens einen Anregungsmuster betreibt, mittels einer integrierten Messvorrichtung (180) des Langstator-Linearmotors;
**dadurch gekennzeichnet, dass**
ein Beladungszustand des Transportelements (100), insbesondere eine Last des Transportelements, und/oder ein Verschleiß einer Lagerung des Transportelements an der Transportbahn, in Abhängigkeit von dem erfassten Bewegungsprofil und dem erfassten zeitlichen Verlauf des Laststroms und/oder der Lastspannung mittels der Regeleinheit bestimmt wird (276).

2. Verfahren nach Anspruch 1, wobei ein oder mehrere Anregungsmuster jeweils einem vorgegebenen Bewegungsprofil des Transportelements (100) entsprechen, und wobei der zeitliche Verlauf des Laststroms und/oder der Lastspannung mittels der Regeleinheit (190) derart angepasst wird, dass das erfasste Bewegungsprofil dem vorgegebenen Bewegungsprofil im Wesentlichen entspricht.

3. Verfahren nach Anspruch 1 oder 2, wobei ein oder mehrere Anregungsmuster jeweils einem vorgegebenen zeitlichen Verlauf des Laststroms und/oder der Lastspannung entsprechen.

4. Verfahren nach einem der vorhergehenden Ansprüche, weiterhin eine zumindest teilweise Modellierung (271) des dynamischen Systems nach einem Grey-Box-Modell, insbesondere nach einem 2-Massen-Modell, umfassend, wobei das Bestimmen (276) des Beladungszustands des Transportelements (100) mittels der Regeleinheit (190) unter Berücksichtigung des Grey-Box-Modells erfolgt.

5. Verfahren nach Anspruch 4, wobei das Grey-Box-Modell unter Berücksichtigung einer Temperatur des dynamischen Systems, insbesondere von Führungs- und/oder Lagerelementen (150, 150, 110, 112) des Langstator-Linearmotors (160) und/oder Transportelements (100), und/oder eines Verschleißgrades von Führungs- und/oder Lagerelementen (150, 150, 110, 112) des Langstator-Linearmotors (160) und/oder Transportelements (100) und/oder von Toleranzen mechanischer Bauteile des Langstator-Linearmotors (160) und/oder Transportelements (100) gebildet wird.

6. Verfahren nach einem der Ansprüche 1 bis 3, weiterhin eine zumindest teilweise Modellierung (271) des dynamischen Systems, insbesondere einer Übertragungsfunktion, nach einem Black-Box-Modell umfassend, wobei das Bestimmen (276) des Beladungszustands des Transportelements (100) mittels der Regeleinheit (190) unter Berücksichtigung des Black-Box-Modells erfolgt.

7. Verfahren nach einem der Ansprüche 4 bis 6, weiterhin ein wiederholtes oder kontinuierliches Bestimmen (276) des Beladungszustands des Transportelements (100) umfassend, wobei ein oder mehrere Parameter des Modells mittels der Regeleinheit (190) aufgrund des bestimmten Beladungszustands angepasst werden (277).

8. Verfahren nach einem der Ansprüche 4 bis 7, wobei eine Anzahl der Anregungsmuster größer, bevorzugt zehnmal größer, besonders bevorzugt hundertmal größer als eine Anzahl zu bestimmender Parameter des Modells ist.

9. Verfahren nach Anspruch 8, weiterhin eine Minimierung eines Fehlers des überbestimmten Modells, insbesondere nach dem Least-Mean-Square Algorithmus, mittels der Regeleinheit (190) umfassend.

10. Verfahren nach einem der vorhergehenden Ansprüche, wobei wenigstens ein Anregungsmuster einer Bewegung des Transportelements (100) mit konstanter Geschwindigkeit und/oder wenigstens ein Anregungsmuster einer beschleunigten Bewegung des Transportelements (100) entspricht.

11. Verfahren nach Anspruch 10, wobei das Anregungsmuster einer Treppenfunktion in einem Geschwindigkeit-Zeit-Verlauf oder einem Beschleunigung-Zeit-Verlauf entspricht.

12. Verfahren nach einem der vorhergehenden Ansprüche, wobei ein Beladungszustand, insbesondere eine Last, einer Gruppe von Transportelementen, die dazu ausgebildet sind, gemeinsam ein Objekt zu transportieren, bestimmt wird, und
wobei mittels der Regeleinheit eine Bestimmung des Typs und/oder der Masse des transportierten Objekts auf der Grundlage des Beladungszustands oder der Last eines jeden Transportelements der Gruppe erfolgt.

13. Verfahren nach einem der vorhergehenden Ansprüche, wobei das Bewegungsprofil und der zeitliche Verlauf des Laststroms und/oder der Lastspannung eines unbeladenen Transportelements mittels der Regeleinheit in zeitlichen Abständen wiederholt erfasst werden, und wobei die Regeleinheit aufgrund einer zeitlichen Änderung der bestimmten Last des Transportelements einen Verschleißgrad der Lagerung des Transportelements bestimmt.

14. Verfahren nach einem der vorhergehenden Ansprüche, weiterhin das Bestimmen einer Anzahl der von dem Transportelement transportierten Behälter auf der Grundlage der bestimmten Last umfassend.

15. Transportsystem zum Transport von Lasten, umfassend:
einen, insbesondere synchronen, Langstator-Linearmotor (160),
eine Vielzahl von Transportelementen (100), und
eine Regeleinheit (190), die dazu ausgebildet ist, die Transportelemente mittels des Langstator-Linearmotors individuell gesteuert entlang einer Transportbahn des Transportsystems zu bewegen;
wobei das Transportsystem weiterhin eine Positionserfassungsvorrichtung (140, 145) und/oder Geschwindigkeitserfassungsvorrichtung (140, 145), insbesondere entlang zumindest einer Teilstrecke der Transportbahn, zum Erfassen eines Bewegungsprofils eines Transportelements (100) aufweist, und
wobei der Langstator-Linearmotor (160) eine integrierte Messvorrichtung (180) zum Erfassen eines zeitlichen Verlaufs eines Laststroms und/oder einer Lastspannung, mit dem und/oder mit der die Regeleinheit (190) den Langstator-Linearmotor (160) betreibt, aufweist;
**dadurch gekennzeichnet, dass**
die Regeleinheit (190) dazu ausgebildet ist, eine Vielzahl von einzeln ansteuerbaren Elektromagneten (161) des Langstator-Linearmotors (160) nach wenigstens einem Anregungsmuster anzusteuern, wobei jedes Anregungsmuster einem Bewegungsprofil des Transportelements (100) entspricht, und ein Beladungszustand, insbesondere eine Last, des Transportelements und/oder ein Verschleiß einer Lagerung des Transportelements an der Transportbahn in Abhängigkeit von einem erfassten Bewegungsprofil und einem erfassten zeitlichen Verlauf des Laststroms und/oder der Lastspannung zu bestimmen.

16. Transportsystem nach Anspruch 15, wobei das Transportelement (100) dazu ausgebildet ist, wenigstens einen, insbesondere mit einer Flüssigkeit befüllten, Behälter, zu transportieren.

17. Transportsystem nach Anspruch 15 oder 16, wobei die Teilstrecke gerade und eben ausgebildet ist, und wobei wenigstens ein Anregungsmuster einer Bewegung des Transportelements (100) mit konstanter Geschwindigkeit und/oder wenigstens ein Anregungsmuster einer beschleunigten Bewegung des Transportelements (100) entspricht.

18. Transportsystem nach Anspruch 15 oder 16, wobei die Teilstrecke in einer vertikalen Richtung, insbesondere mit variierender Krümmung, gekrümmt ist, und wobei optional wenigstens ein Anregungsmuster einer Bewegung des Transportelements (100) mit konstanter Geschwindigkeit entspricht.

## Claims

1. Method for identifying a load and/or wear of a transport element (100) of a transport system with a plurality of transport elements (100), a long-stator linear motor (160), particularly a synchronous one, and a control unit (190) for the individually controlled movement of the transport elements along a transport track of the transport system by means of the long-stator linear motor, comprising:
excitation (273) of a dynamic system consisting of the long-stator linear motor (160) and the transport element (100), through triggering of the long-stator linear motor by means of the control unit (190) according to at least one excitation pattern, wherein each excitation pattern corresponds to a movement profile of the transport element along the transport track;
capture (274) of the movement profile of the transport element (100) along the transport track on the basis of the at least one excitation pattern by means of a position detection device (140, 145) and/or speed detection device (140, 145) of the dynamic system;
capture (275) of a chronological sequence of a load current and/or load voltage with which the control unit (190) operates the long-stator linear motor (160) according to the at least one excitation pattern, by means of an integrated measuring device (180) of the long-stator linear motor;
**characterised in that**
a loading condition of the transport element (100), in particular a load, of the transport element and/or wear of a bearing of the transport element on the transport track, is determined (276) by means of the control unit as a function of the captured movement profile and the captured chronological sequence of the load current and/or of the load voltage.

2. Method according to claim 1, wherein one or more excitation patterns correspond respectively to a specified movement profile of the transport element (100), and wherein the chronological sequence of the load current and/or of the load voltage is adjusted by means of the control unit (190) such that the captured movement profile essentially corresponds to the specified movement profile.

3. Method according to claim 1 or 2, wherein one or more excitation patterns correspond respectively to a specified chronological sequence of the load current and/or of the load voltage.

4. Method according to one of the preceding claims, furthermore comprising an at least partial modelling (271) of the dynamic system according to a grey box model, in particular according to a 2-mass model, wherein the loading condition of the transport element (100) is determined (276) by means of the control unit (190), taking into account the grey box model.

5. Method according to claim 4, wherein the grey box model is formed taking into account a temperature of the dynamic system, in particular of guide elements and/or bearing elements (150, 150, 110, 112) of the long-stator linear motor (160) and/or transport element (100), and/or a degree of wear of guide elements and/or bearing elements (150, 150, 110, 112) of the long-stator linear motor (160) and/or transport element (100), and/or of tolerances of mechanical components of the long-stator linear motor (160) and/or transport element (100).

6. Method according to one of the claims 1 to 3, furthermore comprising an at least partial modelling (271) of the dynamic system, in particular of a transfer function, according to a black box model, wherein the loading condition of the transport element (100) is determined (276) by means of the control unit (190), taking into account the black box model.

7. Method according to one of the claims 4 to 6, furthermore comprising repeated or continuous determination (276) of the loading condition of the transport element (100), wherein one or more parameters of the model are adjusted (277) by means of the control unit (190) on the basis of the loading conditions that have been determined.

8. Method according to one of the claims 4 to 7, wherein a number of the excitation patterns is greater, preferably ten times greater, particularly preferably a hundred times greater than a number of parameters of the model that are to be determined.

9. Method according to claim 8, furthermore comprising a minimisation of an error of the overdetermined model, in particular according to the least mean square algorithm, by means of the control unit (190).

10. Method according to one of the preceding claims, wherein at least one excitation pattern corresponds to a movement of the transport element (100) at constant speed and/or at least one excitation pattern corresponds to an accelerated movement of the transport element (100).

11. Method according to claim 10, wherein the excitation pattern corresponds to a step function in a speed / time curve or an acceleration / time curve.

12. Method according to one of the preceding claims, wherein a loading condition, in particular a load, of a group of transport elements which are designed to jointly transport an object, is determined, and
wherein the control unit is used to determine the type and/or mass of the transported object on the basis of the loading condition or of the load of each transport element in the group.

13. Method according to one of the preceding claims, wherein the movement profile and chronological sequence of the load current and/or of the load voltage of an unladen transport element are repeatedly captured at time intervals by means of the control unit, and wherein the control unit determines a degree of wear of the bearing of the transport element on the basis of a change over time in the determined load of the transport element.

14. Method according to one of the preceding claims, furthermore comprising the determination of a number of containers transported by the transport element on the basis of the load that has been determined.

15. Transport system for transporting loads, comprising:
a long-stator linear motor (160), particularly a synchronous one,
a plurality of transport elements (100), and
a control unit (190) that is designed to move the transport elements, in an individually controlled manner, along a transport track of the transport system, by means of the long-stator linear motor;
wherein the transport system furthermore has a position detection device (140, 145) and/or speed detection device (140, 145), in particular along at least one part-section of the transport track, to capture a movement profile of a transport element (100), and
wherein the long-stator linear motor (160) has an integrated measuring device (180) to capture a chronological sequence of a load current and/or of a load voltage, with which the control unit (190) operates the long-stator linear motor (160);
**characterised in that**
the control unit (190) is designed to trigger a plurality of individually controllable electromagnets (161) of the long-stator linear motor (160) according to at least one excitation pattern, wherein each excitation pattern corresponds to a movement profile of the transport element (100), and to determine a loading condition, in particular a load, of the transport element and/or wear of a bearing of the transport element on the transport track as a function of the captured movement profile and a captured chronological sequence of the load current and/or of the load voltage.

16. Transport system according to claim 15, wherein the transport element (100) is designed to transport at least one container, in particular one filled with liquid.

17. Transport system according to claim 15 or 16, wherein the part-section is designed to be straight and level, and wherein at least one excitation pattern corresponds to a movement of the transport element (100) at constant speed and/or at least one excitation pattern corresponds to an accelerated movement of the transport element (100).

18. Transport system according to claim 15 or 16, wherein the part-section is curved in a vertical direction, in particular with varying curvature, and wherein optionally at least one excitation pattern corresponds to a movement of the transport element (100) at constant speed.

## Revendications

1. Procédé d'identification d'une charge et/ou d'une usure d'un élément de transport (100) d'un système de transport comprenant une pluralité d'éléments de transport (100), un moteur linéaire à stator long (160), en particulier synchrone, et une unité de régulation (190) permettant de déplacer les éléments de transport de manière commandée et individuelle le long d'une voie de transport du système de transport au moyen du moteur linéaire à stator long, comprenant les étapes consistant à :
exciter (273) un système dynamique constitué du moteur linéaire à stator long (160) et de l'élément de transport (100) grâce à une étape consistant à commander le moteur linéaire à stator long au moyen de l'unité de régulation (190) selon au moins un modèle d'excitation, dans lequel chaque modèle d'excitation correspond à un profil de déplacement de l'élément de transport le long de la voie de transport ;
détecter (274) le profil de déplacement de l'élément de transport (100) le long de la voie de transport en se basant sur au moins un modèle d'excitation au moyen d'un dispositif de détection de position (140, 145) et/ou d'un dispositif de détection de vitesse (140, 145) du système dynamique ;
détecter (275) une évolution temporelle d'un courant de charge et/ou d'une tension de charge avec lequel et/ou avec laquelle l'unité de régulation (190) actionne le moteur linéaire à stator long (160) selon le au moins un modèle d'excitation, au moyen d'un dispositif de mesure (180) intégré du moteur linéaire à stator long ;
**caractérisé en ce que**
un état de chargement de l'élément de transport (100), en particulier une charge de l'élément de transport, et/ou une usure d'un logement de l'élément de transport au niveau de la voie de transport, sont déterminés (276) au moyen de l'unité de régulation en fonction du profil de déplacement détecté et de l'évolution temporelle détectée du courant de charge et/ou de la tension de charge.

2. Procédé selon la revendication 1, dans lequel un ou plusieurs modèle(s) d'excitation correspond(ent) respectivement à un profil de déplacement prédéfini de l'élément de transport (100), et dans lequel l'évolution temporelle du courant de charge et/ou de la tension de charge est adaptée au moyen de l'unité de régulation (190) de telle manière que le profil de déplacement détecté correspond essentiellement au profil de déplacement prédéfini.

3. Procédé selon la revendication 1 ou 2, dans lequel un ou plusieurs modèle(s) d'excitation correspond(ent) respectivement à une évolution temporelle prédéfinie du courant de charge et/ou de la tension de charge.

4. Procédé selon l'une quelconque des revendications précédentes, comprenant en outre une étape de modélisation (271) au moins partielle du système dynamique selon un modèle en boîte grise, en particulier selon un modèle à 2 masses, dans lequel l'étape de détermination (276) de l'état de chargement de l'élément de transport (100) est effectuée au moyen de l'unité de régulation (190) en tenant compte du modèle en boîte grise.

5. Procédé selon la revendication 4, dans lequel le modèle en boîte grise est formé en tenant compte d'une température du système dynamique, en particulier d'éléments de guidage et/ou de logement (150, 150, 110, 112) du moteur linéaire à stator long (160) et/ou de l'élément de transport (100), et/ou d'un degré d'usure d'éléments de guidage et/ou de logement (150, 150, 110, 112) du moteur linéaire à stator long (160) et/ou de l'élément de transport (100) et/ou de tolérances de composants mécaniques du moteur linéaire à stator long (160) et/ou de l'élément de transport (100).

6. Procédé selon l'une quelconque des revendications 1 à 3, comprenant en outre une étape de modélisation (271) au moins partielle du système dynamique, en particulier d'une fonction de transfert, selon un modèle en boîte noire, dans lequel l'étape de détermination (276) de l'état de chargement de l'élément de transport (100) est effectuée au moyen de l'unité de régulation (190) en tenant compte du modèle en boîte noire.

7. Procédé selon l'une quelconque des revendications 4 à 6, comprenant en outre une étape de détermination (276) répétée ou continue de l'état de chargement de l'élément de transport (100), dans lequel un ou plusieurs paramètre(s) du modèle est/sont adapté(s) (277) au moyen de l'unité de régulation (190) en se basant sur l'état de chargement déterminé.

8. Procédé selon l'une quelconque des revendications 4 à 7, dans lequel le nombre de modèles d'excitation est supérieur, de manière préférée dix fois supérieur, de manière particulièrement préférée cent fois supérieur au nombre de paramètres à déterminer du modèle.

9. Procédé selon la revendication 8, comprenant en outre une étape de minimisation, au moyen de l'unité de régulation (190), en particulier selon la méthode des moindres carrés, d'une erreur du modèle surdéterminé.

10. Procédé selon l'une quelconque des revendications précédentes, dans lequel au moins un modèle d'excitation correspond à un déplacement de l'élément de transport (100) à vitesse constante et/ou au moins un modèle d'excitation correspond à un déplacement accéléré de l'élément de transport (100).

11. Procédé selon la revendication 10, dans lequel le modèle d'excitation correspond à une fonction en escalier au sein d'une courbe vitesse-temps ou d'une courbe accélération-tem ps.

12. Procédé selon l'une quelconque des revendications précédentes, dans lequel un état de chargement, en particulier une charge, d'un groupe d'éléments de transport conçus pour transporter ensemble un objet, est déterminé, et
dans lequel une étape de détermination du type et/ou de la masse de l'objet transporté est effectuée au moyen de l'unité de régulation en se basant sur l'état de chargement ou sur la charge de chaque élément de transport du groupe.

13. Procédé selon l'une quelconque des revendications précédentes, dans lequel le profil de déplacement et l'évolution temporelle du courant de charge et/ou de la tension de charge d'un élément de transport non chargé sont détectés de manière répétée à des intervalles de temps au moyen de l'unité de régulation, et dans lequel l'unité de régulation détermine un degré d'usure du logement de l'élément de transport en se basant sur une variation temporelle de la charge déterminée de l'élément de transport.

14. Procédé selon l'une quelconque des revendications précédentes, comprenant en outre une étape de détermination d'un nombre de conteneurs transportés par l'élément de transport en se basant sur la charge déterminée.

15. Système de transport permettant de transporter des charges, comprenant :
un moteur linéaire à stator long (160), en particulier synchrone,
une pluralité d'éléments de transport (100), et
une unité de régulation (190) conçue pour déplacer les éléments de transport de manière commandée et individuelle au moyen du moteur linéaire à stator long le long d'une voie de transport du système de transport ;
dans lequel le système de transport présente en outre un dispositif de détection de position (140, 145) et/ou un dispositif de détection de vitesse (140, 145), en particulier le long d'au moins un tronçon de la voie de transport, permettant de détecter un profil de déplacement d'un élément de transport (100), et
dans lequel le moteur linéaire à stator long (160) présente un dispositif de mesure (180) intégré permettant de détecter une évolution temporelle d'un courant de charge et/ou d'une tension de charge avec lequel et/ou avec laquelle l'unité de régulation (190) actionne le moteur linéaire à stator long (160) ;
**caractérisé en ce que**
l'unité de régulation (190) est conçue pour commander une pluralité d'électroaimants (161), pouvant être commandés de manière individuelle, du moteur linéaire à stator long (160) selon au moins un modèle d'excitation, dans lequel chaque modèle d'excitation correspond à un profil de déplacement de l'élément de transport (100), et pour déterminer un état de chargement, en particulier une charge, de l'élément de transport et/ou une usure d'un logement de l'élément de transport au niveau de la voie de transport en fonction d'un profil de déplacement détecté et d'une évolution temporelle détectée du courant de charge et/ou de la tension de charge.

16. Système de transport selon la revendication 15, dans lequel l'élément de transport (100) est conçu pour transporter au moins un conteneur, en particulier rempli de liquide.

17. Système de transport selon la revendication 15 ou 16, dans lequel le tronçon est droit et plat, et dans lequel au moins un modèle d'excitation correspond à un déplacement de l'élément de transport (100) à vitesse constante et/ou au moins un modèle d'excitation correspond à un déplacement accéléré de l'élément de transport (100).

18. Système de transport selon la revendication 15 ou 16, dans lequel le tronçon est courbé dans une direction verticale, en particulier avec une courbure variable, et dans lequel au moins un modèle d'excitation correspond de manière facultative à un déplacement de l'élément de transport (100) à vitesse constante.
